# EUROPÄISCHE PATENTSCHRIFT

(11) **EP 3 833 532 B1**
(45) Veröffentlichungstag und Bekanntmachung des Hinweises auf die Patenterteilung: **22.05.2024**
(21) Anmeldenummer: 19750113.3
(22) Anmeldetag: 05.08.2019
(51) Int. Cl.: B22F 10/00, B22F 12/00, B29C 64/124, B33Y 40/00, B33Y 30/00, B33Y 10/00, B29C 64/255, B29C 64/25

(54) **SYSTEM ZUM HERSTELLEN EINES DREIDIMENSIONALEN OBJEKTS**
SYSTEM FOR PRODUCING A THREE-DIMENSIONAL OBJECT
SYSTÈME DESTINÉ À LA FABRICATION D'UN OBJET EN 3D

(30) Priorität: 06.08.2018 DE 102018119069
(43) Veröffentlichungstag der Anmeldung: 16.06.2021
(73) Patentinhaber: Rapid Shape GmbH, 71296 Heimsheim (DE)
(72) Erfinder: SCHULTHEISS, Andreas, 75417 Mühlacker (DE); GEITNER, Andreas, 71229 Leonberg (DE)
(74) Vertreter: Hoeger, Stellrecht & Partner Patentanwälte mbB
(86) Internationale Anmeldenummer: PCT/EP2019/070958
(87) Internationale Veröffentlichungsnummer: WO 2020/030562

(56) Entgegenhaltungen:
- EP-A1- 1 880 831
- EP-A1- 3 330 062
- WO-A2-2017/079774
- US-A1- 2017 326 787

## Beschreibung

Die vorliegende Erfindung betrifft ein System zum Herstellen eines dreidimensionalen Objekts durch Verfestigen, insbesondere schichtweise oder kontinuierlich, eines unter Einwirkung von Strahlung verfestigbaren Materials, welches System einen Behälter zum Aufnehmen des verfestigbaren Materials umfasst, in welchem Behälter das verfestigbare Material durch Einwirkung von Strahlung zum Herstellen des dreidimensionalen Objekts schichtweise oder kontinuierlich verfestigbar ist, wobei der Behälter einen Behälterboden und eine vom Behälterboden abstehende, umlaufende Behälterwand umfasst, wobei der Behälterboden und die Behälterwand einen Materialaufnahmeraum zum Aufnehmen des verfestigbaren Materials begrenzen, wobei der Behälter einen von einer Behälterhülle umgebenen Behälterinnenraum definiert, wobei der Behälterinnenraum den Materialaufnahmeraum umfasst, wobei die Behälterhülle geschlossen ist und wobei die Behälterhülle ein Trägerelement umfasst, welches eine Haltefläche zum Halten des aus dem verfestigbaren Material ausgebildeten dreidimensionalen Objekts definiert, wobei der Behälter eine an der Behälterhülle angeordnete Schnittstelleneinrichtung zum Einbringen des verfestigbaren Materials durch die Behälterhülle in den Behälterinnenraum hinein aufweist und wobei die Schnittstelleneinrichtung vom Behälterboden beabstandet angeordnet oder ausgebildet ist.

Systeme der eingangs beschriebenen Art sind insbesondere in Form von sogenannten 3D-Druckern bekannt, mit denen dreidimensionale Objekte durch schichtweises Verfestigen einer, beispielsweise mittels elektromagnetischer Strahlung, insbesondere im ultravioletten Spektralbereich, polymerisierbaren Harzlösung hergestellt werden können.

Ein Problem beim Betreiben solcher Systeme ist insbesondere die Reinigung des Behälters, welcher üblicherweise wannenförmig ausgebildet ist und daher auch als Wanne bezeichnet wird.

Ein weiteres Problem ist insbesondere die Kontamination von Teilen des Systems, beispielsweise einer Trägervorrichtung desselben, an welcher das verfestigte dreidimensionale Objekt während des Herstellprozesses gehalten ist, mit dem zu verfestigenden Material. Dieses ist sehr häufig aufwendig, insbesondere als Sondermüll, zu entsorgen. Jegliche Kontamination des Systems mit dem zu verfestigenden Material erfordert einen erheblichen Reinigungsaufwand mit Reinigungsgeräten und auch Reinigungsmitteln, die nur speziell für diesen Zweck eingesetzt werden können und dann ebenfalls als Sondermüll entsorgt werden müssen.

Aus der WO 2017/079774 A2 ist eine Stereolithographie-Vorrichtung mit Kartuscheneinrichtung bekannt. Ein Stereolithographie-Verfahren und eine Vorrichtung sowie eine Halterung zur Verwendung bei einem solchen Verfahren sind in der US 2017/0326787 A1 beschrieben. In der EP 1 880 831 A1 sind Verfahren und Systeme zur schichtweisen Herstellung eines dreidimensionalen Objekts offenbart. Eine Materialbereitstellungsvorrichtung für ein Stereolithographiegerät ist aus der EP 330 062 A1 bekannt.

Es ist daher eine Aufgabe der vorliegenden Erfindung, den Betrieb eines Systems der eingangs beschriebenen Art und insbesondere dessen Handhabung zu vereinfachen.

Diese Aufgabe wird bei einem System der eingangs beschriebenen Art erfindungsgemäß dadurch gelöst, dass die Schnittstelleneinrichtung eine Membran, insbesondere durchstechbar, und/oder einen Gewindeabschnitt oder einen Bajonettanschluss zum lösbaren Verbinden mit einer korrespondierenden Materialbehälterschnittstelleneinrichtung eines mit verfestigbarem Material befüllten Materialbehälters umfasst.

Ein in der vorgeschlagenen Weise weitergebildetes System der eingangs beschriebenen Art hat insbesondere den Vorteil, dass das dreidimensionale Objekt im Behälterinnenraum, also vollständig von der Behälterhülle umgeben, hergestellt wird. Somit ist auch das verfestigbare Material bei der Herstellung des dreidimensionalen Objekts von der Behälterhülle umgeben. Auf diese Weise kann insbesondere auch eine Geruchsbelästigung beim Betrieb des Systems minimiert oder gar ausgeschlossen werden. Ferner kann durch diese Ausgestaltung eine Kontamination des Systems mit dem verfestigbaren Material praktisch ausgeschlossen werden. Mit einem solchen Behälter lassen sich insbesondere dreidimensionale Objekte ausbilden und dann, wenn diese fertig verfestigt sind, den Behälter insgesamt aus dem System entnehmen. Die Behälterhülle kann dann in gewünschter Weise geöffnet werden, um das dreidimensionale Objekt aus dem Behälter zu entnehmen. Die Behälterhülle kann zu diesem Zweck beispielsweise wiederverschließbar ausgebildet sein, insbesondere mit einer Öffnung, die in der Art eines Reißverschlusses geöffnet und wieder verschlossen werden kann. Durch das Trägerelement, welches von der Behälterhülle umfasst ist, wird das verfestigte dreidimensionale Objekt, das an der Haltefläche gehalten ist, im Inneren der Behälterhülle, mithin also im Behälterinnenraum, ausgebildet. Der Behälter bildet somit eine Art Kapsel, die vor der Ausbildung eines dreidimensionalen Objekts in das System eingesetzt wird und nach der fertiggestellten Ausbildung des dreidimensionalen Objekts wieder aus dem System entnommen werden kann. Auf diese Weise lassen sich dreidimensionale Objekte einfach und sauber ausbilden. Die Handhabung eines Systems der eingangs beschriebenen Art lässt sich auf diese Weise insbesondere deutlich vereinfachen. Günstig ist es, dass der Behälter eine an der Behälterhülle angeordnete Schnittstelleneinrichtung zum Einbringen des verfestigbaren Materials durch die Behälterhülle in den Behälterinnenraum hinein aufweist. Die Schnittstelleneinrichtung ermöglicht es insbesondere, den Behälter mit dem verfestigbaren Material auf einfache Weise zu befüllen. So kann insbesondere nur so viel von dem verfestigbaren Material in den Behälter eingefüllt werden, wie zur Ausbildung des dreidimensionalen Objekts auch tatsächlich benötigt wird. Dies ermöglicht einen ressourcenschonenden und umweltverträglichen Betrieb des Systems. Gemäß der Erfindung lässt sich das System auf einfache Weise ausbilden dadurch, dass die Schnittstelleneinrichtung eine Öffnung und/oder eine Membran, insbesondere semipermeabel, umfasst. Insbesondere kann die Membran durchstechbar ausgebildet sein. Das verfestigbare Material kann auf einfache Weise durch die Öffnung in den Behälterinnenraum und so in den Materialaufnahmeraum des Behälters eingebracht werden. Eine Membran kann beispielsweise mit einer Kanüle durchstochen und so das verfestigbare Material in den Materialaufnahmeraum durch Injizieren eingebracht werden. Die Öffnung kann insbesondere verschließbar ausgebildet sein, beispielsweise mit einem Verschlusselement in Form eines Deckels. So kann die Öffnung nach dem Befüllen des Materialaufnahmeraums mit dem verfestigbaren Material wieder verschlossen werden. Insbesondere kann der Behälter so gasdicht und geruchsdicht ausgebildet und zum Herstellen des dreidimensionalen Objekts eingesetzt werden. Gemäß der Erfindung ist die Schnittstelleneinrichtung vom Behälterboden beabstandet angeordnet oder ausgebildet. Insbesondere ist sie vorzugsweise nicht in der Behälterwand angeordnet oder ausgebildet. Eine solche Anordnung der Schnittstelleneinrichtung ermöglicht es insbesondere, an der Behälterhülle keinen direkten Zugang zum Materialaufnahmeraum im Bereich des Behälterbodens und der Behälterwand vorzusehen. Etwaige Undichtigkeiten der Schnittstelleneinrichtung können dann nicht dazu führen, dass das verfestigbare Material in unerwünschter Weise aus dem Behälter austreten und das System oder Komponenten desselben kontaminieren kann. Gemäß der Erfindung umfasst die Schnittstelleneinrichtung optional einen Gewindeabschnitt oder einen Bajonettanschluss zum lösbaren Verbinden mit einer korrespondierenden Materialbehälterschnittstelleneinrichtung eines mit verfestigbarem Material befüllten Materialbehälters. Eine derartige Schnittstelleneinrichtung ermöglicht insbesondere eine fluiddichte Kopplung mit dem Materialbehälter, um das verfestigbare Material schnell und sauber in den Materialaufnahmeraum des Behälters einbringen zu können. So lässt sich eine Kontamination des Systems, insbesondere auch des Behälters von außen, beim Befüllen des Behälters mit verfestigbarem Material praktisch vollständig vermeiden.

Günstig ist es, wenn der Behälterboden und/oder die Behälterwand einen Teil der Behälterhülle bilden. Dies ermöglicht es insbesondere, den Behälter an einem Stück in das System einzusetzen, beispielsweise das Trägerelement des Behälters mit einer Trägervorrichtung des Systems zu koppeln und den Behälter mit einer Haltevorrichtung des Systems zum Halten des Behälters in gewünschter Weise in Eingriff bringen.

Vorteilhaft ist es, wenn die Schnittstelleneinrichtung in oder an der Behälterwand angeordnet oder ausgebildet ist. Eine solche Anordnung ist insbesondere dann vorteilhaft, wenn die Behälterwand, also die, die direkt den Materialaufnahmeraum begrenzt, stabiler ausgebildet ist als die Behälterhülle ohne den Behälterboden und die Behälterwand.

Vorteilhafterweise ist der Behälterboden aus einem anderen Material ausgebildet als die Behälterwand. Dies hat insbesondere den Vorteil, dass der Behälterboden aus einem Behälterbodenmaterial ausgebildet werden kann, welches an dem verfestigten, verfestigbaren Material schlecht anhaftet beziehungsweise einfach von diesem abgezogen werden kann. Die Behälterwand kann insbesondere aus einem Behälterwandmaterial ausgebildet werden, welches die erforderliche Stabilität aufweist, um das verfestigbare Material im Behälter zu halten. Ferner kann der Behälterboden aus einem Material ausgebildet werden, welches für die zum Verfestigen des verfestigbaren Materials eingesetzte Strahlung in optimaler Weise strahlungsdurchlässig ist. So können für die Behälterwand und den Behälterboden jeweils die optimalen Materialen eingesetzt werden. Kompromisse sind dann nicht erforderlich.

Vorteilhaft ist es, wenn der Behälterboden für die zum Verfestigen des verfestigbaren Materials eingesetzte Strahlung strahlungsdurchlässig ausgebildet ist. Insbesondere kann er für elektromagnetische Strahlung in einem Wellenlängenbereich von etwa 700 nm bis etwa 1000 nm durchlässig sein. Ein derartiger Behälterboden ermöglicht es insbesondere, das verfestigbare Material zum Ausbilden des dreidimensionalen Objekts durch den Behälterboden hindurch zu belichten.

Vorzugsweise ist der Behälterboden in Form eines Trennelements ausgebildet. Ein Trennelement in diesem Sinne ermöglicht es insbesondere, auf einfache Weise vom verfestigten dreidimensionalen Objekt abgezogen zu werden. Zur Ausbildung des dreidimensionalen Objekts wird üblicherweise eine dünne Schicht des nicht verfestigten, verfestigbaren Materials zwischen der letzten verfestigten Schicht des dreidimensionalen Objekts und dem Behälterboden mit geeigneter Strahlung beaufschlagt. Dies führt dazu, dass der Behälterboden nach dem Aushärten dieser Schicht aus verfestigbarem Material mit dem dreidimensionalen Objekt verbunden ist beziehungsweise an diesem anhaftet. Um eine weitere Schicht des dreidimensionalen Objekts ausbilden zu können, muss dann das dreidimensionale Objekt, soweit dies bereits verfestigt ist, vom Behälterboden weg bewegt, also von diesem getrennt, werden, damit noch nicht verfestigtes, verfestigbares Material zwischen das dreidimensionale Objekt und den Behälterboden strömen kann. Ein solches Trennelement ermöglicht also insbesondere auf einfache Weise das Abziehen beziehungsweise Ablösen desselben vom dreidimensionalen Objekt.

Vorteilhaft ist es, wenn der Behälterboden mit einer den Materialaufnahmeraum begrenzenden Antihaftschicht versehen ist oder wenn der Behälterboden aus einem nicht oder wenig am verfestigten Material anhaftenden Behälterbodenmaterial ausgebildet ist. Eine derartige Weiterbildung ermöglicht es insbesondere, auf einfache Weise den Behälterboden nach dem Ausbilden einer verfestigten Schicht des dreidimensionalen Objekts, die am Behälterboden anhaftet oder mit diesem in Kontakt steht, vom Objekt abzulösen. Insbesondere kann ein solcher Behälterboden ein Trennelement im oben beschriebenen Sinne bilden.

Das Ablösen des Behälterbodens vom dreidimensionalen verfestigten Objekt lässt sich auf besonders einfache Weise realisieren, wenn der Behälterboden in Form einer Folie oder aus einer Folie ausgebildet ist. Eine solche Folie hat insbesondere die Eigenschaft flexibel und/oder elastisch zu sein, je nachdem, aus welchem Material sie ausgebildet ist. Zudem ist sie dünn und somit kostengünstig herstellbar. Ferner lässt sie sich auf einfache Weise ungespannt oder spannungslos mit der Behälterwand verbinden. Sie kann jedoch insbesondere auch in gewünschter Weise bei Bedarf gespannt werden, um eine definierte Behälterbodenfläche, die den Materialaufnahmeraum begrenzt, zu definieren. Diese Behälterbodenfläche kann eben oder gekrümmt sein.

Günstig ist es, wenn der Behälterboden elastisch und/oder flexibel ausgebildet ist. Die flexible und/oder elastische Ausbildung des Behälterbodens ermöglicht es insbesondere, den Behälterboden vom verfestigten Material des dreidimensionalen Objekts abzulösen, und zwar auf einfache Weise, wenn eine weitere Schicht des dreidimensionalen Objekts verfestigt ist und das verfestigte dreidimensionale Objekt aus dem verfestigbaren Material schrittweise herausbewegt wird. So kann noch nicht verfestigtes verfestigbares Material zwischen den Behälterboden und die letzte verfestigte Schicht des dreidimensionalen Objekts strömen und durch Strahlungsbeaufschlagung wiederum verfestigt werden.

Vorzugsweise weist der Behälterboden eine Dicke in einem Bereich von etwa 0,05 mm bis etwa 3 mm auf. Insbesondere kann er eine Dicke in einem Bereich von etwa 0,07 mm bis etwa 0,3 mm aufweisen. Behälterböden mit derartigen Dicken auszubilden, ermöglicht es insbesondere, diese elastisch und/oder flexibel auszubilden sowie spannungslos oder spannungsfrei mit der Behälterwand zu verbinden. Ferner hat ein dünner Behälterboden den Vorteil, dass er besonders gut für die zum Verfestigen des verfestigbaren Materials erforderliche Strahlung durchlässig ist.

Einfach und kostengünstig ausbilden lässt sich der Behälterboden aus einem Kunststoff. Insbesondere kann es sich bei dem Kunststoff um Polytetrafluorethylen (PTFE), Perfluoralkoxy-Polymer (PFA), Ethylen-Tetrafluorethylen-Copolymer (ETFE) und/oder Tetrafluorethylen-Hexafluorpropylen-Copolymer (FEP) handeln. Insbesondere ermöglicht es ein Behälterboden aus Kunststoff, diesen einfach und kostengünstig herzustellen. Ein solcher Behälterboden kann insbesondere flexibel und/oder elastisch ausgebildet werden. Zudem ermöglichen es die explizit genannten Kunststoffe beziehungsweise Kombinationen aus Kunststoffen, den Behälterboden in Form eines Trennelements wie oben beschrieben auszubilden, welches sich einfach, also ohne großen Kraftaufwand, nach dem Aushärten der letzten belichteten Schicht des herzustellenden dreidimensionalen Objekts von diesem ablösen lässt.

Der Behälter lässt sich auf einfache Weise ausbilden, wenn sich die Behälterwand senkrecht oder im Wesentlichen senkrecht vom Behälterboden weg erstreckt. Im Wesentlichen senkrecht bedeutet insbesondere eine Neigung von etwa +/- 10 Grad bezogen auf die Senkrechte.

Um die Stabilität des Behälters zu erhöhen, ist es vorteilhaft, wenn die Behälterwand selbsttragend ausgebildet ist. Insbesondere kann sie in Form eines in sich geschlossenen ringförmigen Behälterwandrahmens ausgebildet sein.

Gemäß einer weiteren bevorzugten Ausführungsform der Erfindung kann vorgesehen sein, dass die Behälterhülle mindestens teilweise aus einer Folie ausgebildet ist, wobei insbesondere die Folie elastisch und/oder flexibel ausgebildet ist. Insbesondere kann die gesamte Behälterhülle aus einer Folie ausgebildet sein. Eine solche Behälterhülle ist zudem sehr leicht und mit einem geringen Materialeinsatz herstellbar. So ist sie insbesondere mit relativ geringem Aufwand und umweltverträglich entsorgbar.

Vorteilhaft ist es, wenn die Behälterhülle eine Dicke in einem Bereich von etwa 0,05 mm bis etwa 1,5 mm aufweist. Insbesondere kann sie eine Dicke in einem Bereich von etwa 0,1 mm bis etwa 0,6 mm aufweisen. Behälterhüllen, insbesondere auch die von der Behälterhülle umfasste Behälterwand, mit einer Dicke in den angegebenen Bereichen haben insbesondere die genannten Eigenschaften, nämlich abhängig vom Material, aus dem sie gebildet sind, entweder selbsttragend oder nicht selbsttragend zu sein.

Einfach und kostengünstig lässt sich der Behälter ausbilden, wenn die Behälterhülle aus einem Kunststoff ausgebildet ist.

Die Handhabung des Systems kann insbesondere weiter dadurch vereinfacht werden, dass die Behälterhülle einstückig ausgebildet ist. Insbesondere kann sie bis auf den Behälterboden einstückig ausgebildet sein. Dies ermöglicht es insbesondere, den Behälterboden aus einem anderen Material als die übrige Behälterhülle auszubilden.

Um das durch Bestrahlen verfestigte dreidimensionale Objekt im Behälterinnenraum einfach und sicher ausbilden zu können, ist es vorteilhaft, wenn das Trägerelement dem Behälterboden gegenüberliegend oder im Wesentlichen gegenüberliegend angeordnet oder ausgebildet ist. Dies ermöglicht es insbesondere, das Trägerelement über eine mit diesem gekoppelte Trägervorrichtung in Richtung auf den Behälterboden hin, mithin also in das im Materialaufnahmeraum des Behälters enthaltene verfestigbare Material hinein, und auch wieder aus diesem heraus, zu bewegen.

Um das dreidimensionale Objekt durch Aushärten aus dem verfestigbaren Material herzustellen und schrittweise aus diesem heraus zu bewegen, ist es günstig, wenn die Haltefläche in Richtung oder im Wesentlichen in Richtung auf den Behälterboden hin weisend angeordnet oder ausgebildet ist. Ein System in dieser Weise weiterzubilden hat insbesondere den Vorteil, dass das hergestellte dreidimensionale Objekt zusammen mit dem Trägerelement von der Trägervorrichtung des Systems abgenommen werden kann. Aufgrund der Ausbildung des Behälters mit einer Behälterhülle kann zudem eine Kontamination der Trägervorrichtung mit dem verfestigbaren Material vermieden werden. Eine Reinigung der Trägervorrichtung ist durch die vorgeschlagene Weiterbildung nicht mehr erforderlich.

Vorteilhaft ist es, wenn das Trägerelement ausgebildet ist zum lösbaren Koppeln mit einer bewegbar ausgebildeten oder angeordneten Trägervorrichtung des Systems in einer Kopplungsstellung. Diese Ausgestaltung ermöglicht es insbesondere, das Trägerelement von der Trägervorrichtung abzukoppeln, wenn das dreidimensionale Objekt fertiggestellt ist. Das Trägerelement schützt die Trägervorrichtung vor einer Kontamination mit dem verfestigbaren Material, so dass die Trägervorrichtung nicht gereinigt werden muss. Das System ist dann schneller wieder einsatzbereit. Es muss nur ein neues Trägerelement mit der Trägervorrichtung gekoppelt werden.

Günstig ist es, wenn das Trägerelement mindestens ein erstes Trägerelementkopplungselement umfasst, welches in der Kopplungsstellung mit mindestens einem zweiten Trägerelementkopplungselement der Trägervorrichtung kraft- und/oder formschlüssig in Eingriff steht. Ein solches Trägerelement kann insbesondere auf einfache und sichere Weise mit der Trägervorrichtung gekoppelt und zum Entnehmen des dreidimensionalen Objekts nach dessen Herstellung aus dem System wieder von der Trägervorrichtung abgekoppelt werden.

Vorteilhaft ist es, wenn die Haltefläche, insbesondere in der Kopplungsstellung, eben oder im Wesentlichen eben ausgebildet ist oder wenn die Haltefläche strukturiert, insbesondere eine Mehrzahl von Stabilisierungsnuten umfassend, ausgebildet ist. Eine Struktur der Haltefläche kann grundsätzlich beliebig sein. Alternativ zu den Stabilisierungsnuten können auch insbesondere topfförmige oder pyramidenförmige, regelmäßig angeordnete Vertiefungen ausgebildet sein, die dem Trägerelement eine inhärente Stabilität verleihen, so dass dieses im Wesentlichen selbsttragend ist.

Vorteilhaft ist es, wenn die Behälterhülle einen Trägervorrichtungsüberzug für eine Trägervorrichtung des Systems umfasst und wenn der Trägervorrichtungsüberzug das Trägerelement umfasst. Einen solchen Trägervorrichtungsüberzug vorzusehen hat insbesondere den Vorteil, dass die Trägervorrichtung deutlich besser vor Verschmutzung mit dem verfestigbaren Material geschützt werden kann als ein Trägerelement, welches im Wesentlichen platten- oder schichtförmig ausgebildet ist. Ein Trägervorrichtungsüberzug kann insbesondere die Trägervorrichtung, beispielsweise eine Halteplatte derselben seitlich und insbesondere umlaufend umgeben, so dass die Trägervorrichtung, also insbesondere deren Halteplatte, mindestens teilweise in das verfestigbare Material, das im Materialaufnahmeraum des Behälters aufgenommen ist, eintauchen kann, ohne dass die Trägervorrichtung selbst mit dem verfestigbaren Material kontaminiert wird. Das Trägerelement bildet in der vorgeschlagenen Weise einen integralen Bestandteil des Trägervorrichtungsüberzugs. Das Trägerelement kann insbesondere kraft- und/oder form- und/oder stoffschlüssig mit dem Trägervorrichtungsüberzug verbunden sein.

Günstig ist es, wenn der Trägervorrichtungsüberzug eine Trägervorrichtungsaufnahme definiert, in die die Trägervorrichtung oder ein Teil derselben mindestens teilweise formschlüssig oder im Wesentlichen formschlüssig einführbar ist. Insbesondere kann die Trägervorrichtungsaufnahme einen Teil eines wannenförmigen Trägervorrichtungsüberzugs bilden. Das Trägerelement kann so insbesondere einen Boden des wannenförmigen Trägervorrichtungsüberzugs definieren, wobei die Haltefläche dann insbesondere eine von der Trägervorrichtungsaufnahme weg weisende Bodenfläche des Trägervorrichtungsüberzugs definiert.

Auf einfache Weise lässt sich die Trägervorrichtung vor einer Kontamination mit verfestigbarem Material schützen, wenn der Trägervorrichtungsüberzug in Form eines Überziehers oder eines Tiefziehblisters ausgebildet ist, welche die Trägervorrichtungsaufnahme umfassen oder definieren. Der Trägervorrichtungsüberzug kann so auf einfache Weise über die Trägervorrichtung gezogen oder auf diese aufgestülpt werden.

Besonders einfach und kostengünstig ausbilden lässt sich das System, wenn der Trägervorrichtungsüberzug aus einem Kunststoff ausgebildet ist.

Gemäß einer weiteren bevorzugten Ausführungsform der Erfindung kann vorgesehen sein, dass der Trägervorrichtungsüberzug einen umlaufenden, radial abstehenden Rückhalteflansch oder eine umlaufende, radial vorspringende Rückhaltekante aufweist, welcher Rückhalteflansch beziehungsweise welche Rückhaltekante in der Kopplungsstellung quer, insbesondere senkrecht, zur Schwerkraftrichtung verlaufen. Ein solcher Trägervorrichtungsüberzug bildet mit dem Rückhaltflansch beziehungsweise der Rückhaltekante quasi einen Anschlag für das verfestigbare Material beim Eintauchen der Trägervorrichtung, die mit dem Trägervorrichtungsüberzug geschützt ist, vor Verschmutzung. So kann insbesondere verhindert werden, dass die Trägervorrichtung seitlich vom verfestigbaren Material umströmt und so kontaminiert werden kann.

Um das verfestigbare Material schichtweise zur Ausbildung des dreidimensionalen Objekts, insbesondere in einer definierten Bauebene, aushärten zu können, ist es vorteilhaft, wenn das Trägerelement und der Behälterboden relativ zueinander bewegbar angeordnet oder ausgebildet sind. Beispielsweise kann das Trägerelement mittels der Trägervorrichtung bewegt werden oder der Behälterboden oder sowohl das Trägerelement als auch der Behälterboden, um die gewünschte Relativbewegung zwischen dem Trägerelement und dem Behälterboden zu realisieren.

Um dreidimensionale Objekte aus einem verfestigbaren Material herstellen zu können, ist es vorteilhaft, wenn das System einen mit verfestigbarem Material befüllten Materialbehälter umfasst. Dieser Materialbehälter kann insbesondere separat, also räumlich getrennt, vom Behälter ausgebildet und auch bereitgestellt werden.

Besonders kompakt lässt sich das System in einer nicht durch die Ansprüche definierten erfindungsgemäßen Weise ausbilden, wenn der Materialbehälter vom Behälter umfasst ist. Insbesondere kann beispielsweise eine Wand des Materialbehälters durch die Behälterhülle ausgebildet sein, insbesondere durch einen Abschnitt der Behälterwand und/oder einen Abschnitt des Behälterbodens.

Ein vollständig geschlossenes nicht erfindungsgemäßes System lässt sich insbesondere dadurch ausbilden, dass der Materialbehälter mindestens teilweise, insbesondere vollständig, im vom Behälter definierten Materialaufnahmeraum angeordnet oder ausgebildet ist. Das verfestigbare Material kann dann beispielsweise aus dem Materialbehälter in den Materialaufnahmeraum eingebracht werden, indem der Materialbehälter geöffnet wird. Beispielsweise kann der Materialbehälter hierfür einen entsprechenden Verschluss aufweisen, der sich mindestens einmal öffnen, insbesondere auch wieder verschließen, lässt.

Um den Materialbehälter vorzugsweise nur einmal, insbesondere nur wenige Male, nutzen zu können, um ein oder mehrere dreidimensionale Objekte herzustellen, ist es vorteilhaft, wenn der Materialbehälter mindestens eine Sollbruchstelle zum Öffnen desselben aufweist. Eine Sollbruchstelle ermöglicht insbesondere ein irreversibles Öffnen des Materialbehälters, um das im Materialbehälter enthaltene verfestigbare Material in den Materialaufnahmeraum des Behälters zu überführen.

Günstig ist es, wenn der Materialbehälter eine Materialbehälterschnittstelleneinrichtung umfasst zum Koppeln, insbesondere zum fluiddichten Koppeln, mit der Schnittstelleneinrichtung des Behälters in einer Befüllstellung. Diese Weiterbildung ermöglicht es insbesondere, das Austreten von verfestigbarem Material beim Befüllen des Materialbehälters zu vermeiden. Fluiddicht kann insbesondere sowohl flüssigkeitsdicht als auch gasdicht bedeuten. Eine gasdichte Kopplung in der Befüllstellung hat insbesondere den Vorteil, dass keine Geruchsbelästigung beim Betreiben des Systems auftreten kann.

Gemäß einer weiteren bevorzugten Ausführungsform der Erfindung kann vorgesehen sein, dass die Behälterhülle nur durch Zerstören öffenbar ist zum Entnehmen des verfestigten dreidimensionalen Objekts. Beispielsweise kann die Behälterhülle eine Behälterhüllensollbruchstelle aufweisen, die zum Öffnen der Behälterhülle in definierter Weise irreversibel zerstört werden kann. Insbesondere kann so erreicht werden, dass nach dem Öffnen der Behälterhülle der Behälter insgesamt nicht mehr sinnvoll nutzbar ist. Zum Entsorgen kann dann das im Materialaufnahmeraum des Behälters verbliebene, nicht verfestigte verfestigbare Material durchbelichtet und auf diese Weise ausgehärtet werden, so dass es umweltverträglich entsorgt werden kann.

Ferner kann es vorteilhaft sein, wenn die Behälterhülle mit Ausnahme des Behälterbodens für die zum Verfestigen des verfestigbaren Materials eingesetzte Strahlung undurchlässig oder im Wesentlichen undurchlässig ist. Insbesondere kann die Behälterhülle im genannten Bereich für elektromagnetische Strahlung in einem Wellenlängenbereich von etwa 200 nm bis etwa 1000 nm undurchlässig sein. Durch diese Ausgestaltung kann insbesondere verhindert werden, dass das verfestigbare Material im Materialaufnahmeraum undefiniert aushärten kann, wenn unbeabsichtigt Strahlung die Behälterhülle durchdringt.

Um das verfestigbare Material vor einer unerwünschten Verfestigung zu schützen, ist es vorteilhaft, wenn die Behälterhülle bis auf den Behälterboden einen Transmissionsgrad von maximal 10%, insbesondere von maximal 1%, für die zum Verfestigen des verfestigbaren Materials eingesetzte Strahlung aufweist, insbesondere für elektromagnetische Strahlung in einem Wellenlängenbereich von etwa 200 nm bis etwa 1000 nm. Eine solche Behälterhülle lässt somit nur die zum Verfestigen des verfestigbaren Materials eingesetzte Strahlung durchtreten, so dass die Behälterhülle zwar möglicherweise noch so durchscheinend ist, dass ein Nutzer des Systems einen Füllstand des verfestigbaren Materials im Materialaufnahmeraum erkennen kann, ohne dass jedoch die Gefahr besteht, dass das verfestigbare Material in undefinierter Weise aushärten kann.

Ferner ist es günstig, wenn das System eine Haltevorrichtung zum Halten des Behälters umfasst, so dass der Behälterboden quer, insbesondere senkrecht, zur Schwerkraftrichtung im Raum angeordnet ist und sich die Behälterwand entgegen oder im Wesentlichen entgegen der Schwerkraftrichtung vom Behälterboden weg erstreckt. Eine solche Haltevorrichtung ermöglicht es insbesondere auf einfache Weise, den Behälter, beispielsweise dann, wenn er mit zu verfestigendem Material gefüllt ist, in definierter Weise zu halten, um durch Bestrahlung dreidimensionale Objekte aus dem zu verfestigenden Material auszubilden.

Günstig ist es, wenn das System eine Trägervorrichtung und eine mit der Trägervorrichtung zusammenwirkende Antriebseinrichtung umfasst zum Bewegen der Trägervorrichtung, insbesondere des Trägerelements in der Kopplungsstellung, relativ zum Behälterboden. Insbesondere kann zur Ansteuerung der Antriebseinrichtung das System eine entsprechende Steuerungseinrichtung umfassen, die die Trägervorrichtung und damit das angekoppelte Trägerelement in definierter Weise, insbesondere schrittweise oder kontinuierlich, bewegt, um das dreidimensionale Objekt auszubilden. Insbesondere kann so das Trägerelement beispielsweise auch so weit in den Materialaufnahmeraum hinein bewegt werden, dass es in das darin aufgenommene verfestigbare Material eintauchen kann.

Vorteilhaft ist es, wenn die Antriebseinrichtung ausgebildet ist zum Bewegen des Trägerelements in der Kopplungsstellung parallel oder im Wesentlichen parallel zur Schwerkraftrichtung in Richtung auf den Behälterboden hin und vom Behälterboden weg. Auf diese Weise kann das Trägerelement wie beschrieben bewegt werden, um das dreidimensionale Objekt in bekannter Weise auszubilden.

Ferner ist es vorteilhaft, wenn das System eine Belichtungseinrichtung umfasst zum Belichten, insbesondere schichtweise oder kontinuierlich, des verfestigbaren Materials durch Beaufschlagen mit Strahlung, insbesondere elektromagnetischer Strahlung. So lässt sich insbesondere ein kompaktes System ausbilden, beispielsweise in Form eines autark betreibbaren 3D-Druckers.

Zum Erzeugen der Strahlung ist es günstig, wenn die Belichtungseinrichtung eine Strahlungsquelle umfasst. Beispielsweise kann es sich dabei um eine LED-Lichtquelle handeln.

Um insbesondere eine aufwendige Reinigung des Behälters zu vermeiden, ist es vorteilhaft, wenn der Behälter in Form eines Einwegbehälters ausgebildet ist. Ein solcher Behälter kann ein oder wenige Male genutzt werden, um dreidimensionale Objekte auszubilden. Der geschlossene Behälter kann zum Entnehmen des hergestellten dreidimensionalen Objekts geöffnet werden, insbesondere irreversibel. Wenn der Behälter nicht mehr zum Einsatz kommen soll, kann noch nicht verfestigtes verfestigbares Material, das am Behälter an einer beliebigen Stelle, beispielsweise am Trägerelement oder am Behälterboden oder an der Behälterwand anhaftet, durch entsprechende Bestrahlung durchgehärtet werden, so dass es einfach und umweltgerecht entsorgt werden kann.

Die nachfolgende Beschreibung dient im Zusammenhang mit den Zeichnungen der näheren Erläuterung. Es zeigen:
- Figur 1:: eine schematische Darstellung eines nicht erfindungsgemäßen Ausführungsbeispiels eines Systems zum Herstellen dreidimensionaler Objekte;
- Figur 2:: eine schematische Darstellung eines Ausführungsbeispiels eines Behälters zum Aufnehmen verfestigbaren Materials;
- Figur 3:: eine schematische Darstellung eines weiteren Ausführungsbeispiels eines Behälters;
- Figur 4:: eine schematische Darstellung eines Ausschnitts eines Bodens eines weiteren Ausführungsbeispiels eines Behälters;
- Figur 5:: eine schematische Darstellung eines weiteren Ausführungsbeispiels eines Behälters, welcher mit einer Haltevorrichtung des Systems gehalten ist;

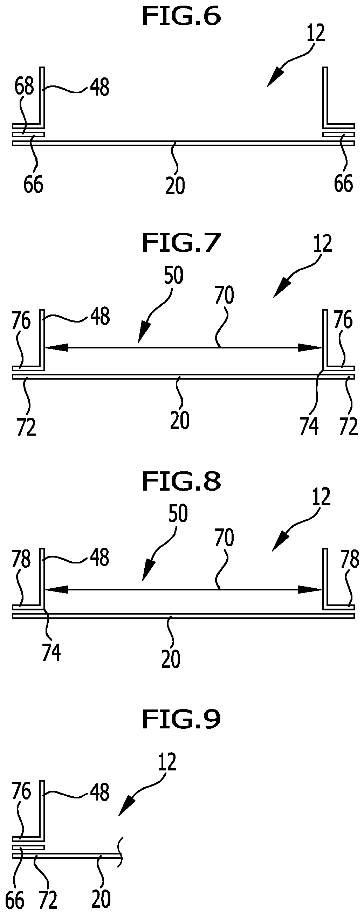

- Figur 6:: eine schematische Darstellung eines weiteren Ausführungsbeispiels eines Behälters;
- Figur 7:: eine schematische Darstellung eines weiteren Ausführungsbeispiels eines Behälters;
- Figur 8:: eine schematische Darstellung eines weiteren Ausführungsbeispiels eines Behälters;
- Figur 9:: eine schematische Darstellung einer Teilansicht eines weiteren Ausführungsbeispiels eines Behälters;

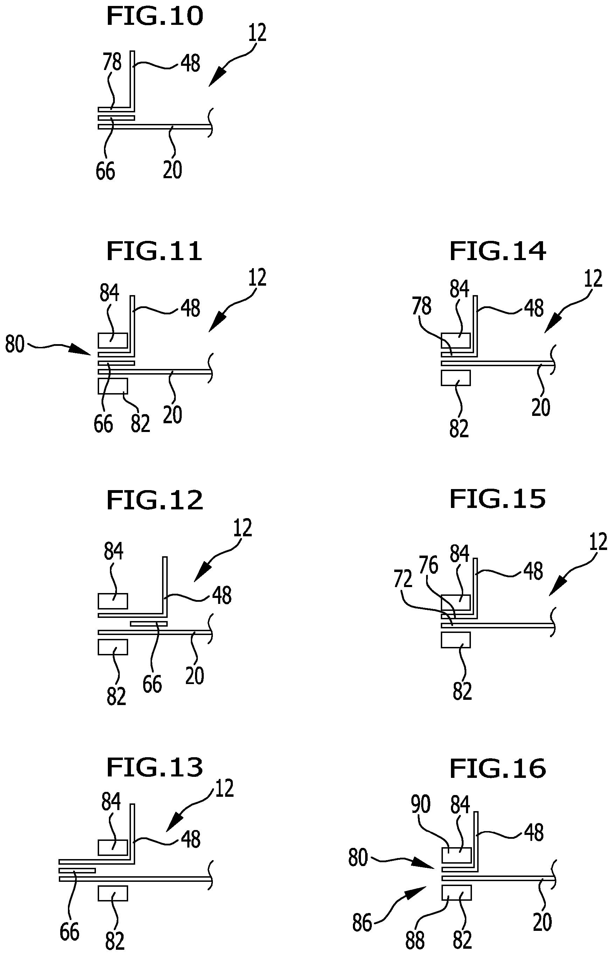

- Figur 10:: eine schematische Darstellung einer Teilansicht eines weiteren Ausführungsbeispiels eines Behälters;
- Figur 11:: eine schematische Darstellung einer Teilansicht eines weiteren Ausführungsbeispiels eines Behälters mit einer Verbindungsvorrichtung;
- Figur 12:: eine schematische Darstellung einer Teilansicht eines weiteren Ausführungsbeispiels eines Behälters mit einer Verbindungsvorrichtung;
- Figur 13:: eine schematische Darstellung einer Teilansicht eines weiteren Ausführungsbeispiels eines Behälters mit einer Verbindungsvorrichtung;
- Figur 14:: eine schematische Darstellung einer Teilansicht eines weiteren Ausführungsbeispiels eines Behälters mit einer Verbindungsvorrichtung;
- Figur 15:: eine schematische Darstellung einer Teilansicht eines weiteren Ausführungsbeispiels eines Behälters mit einer Verbindungsvorrichtung;
- Figur 16:: eine schematische Darstellung einer Teilansicht eines weiteren Ausführungsbeispiels eines Behälters mit einer Verbindungsvorrichtung;
- Figur 17:: eine schematische Darstellung einer Schnittansicht eines weiteren Ausführungsbeispiels eines Behälters mit einer Spannvorrichtung;
- Figur 18:: eine schematische Darstellung einer Schnittansicht eines weiteren Ausführungsbeispiels eines Behälters;
- Figur 19:: eine schematische Darstellung einer Schnittansicht eines Teils eines weiteren nicht erfindungsgemäßen Ausführungsbeispiels eines Systems im Bereich der Trägereinrichtung;

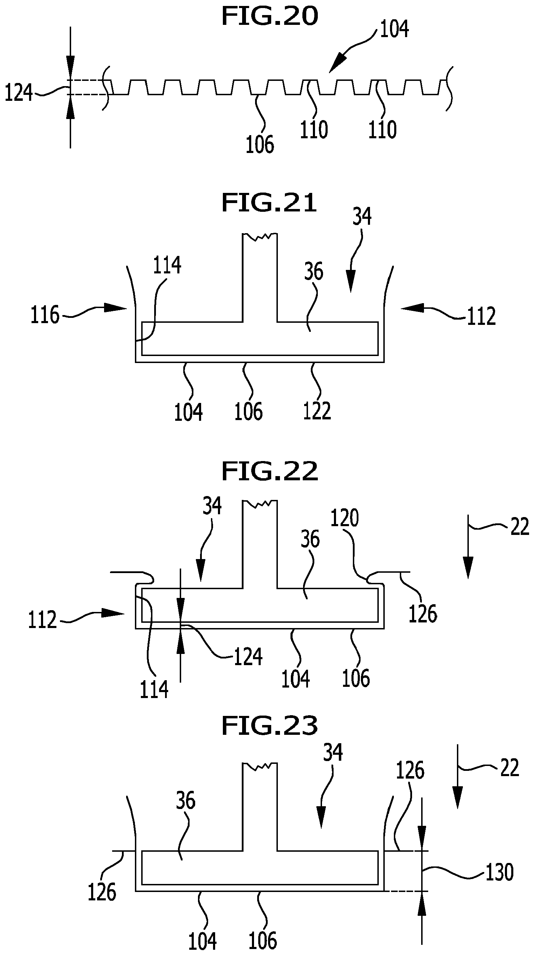

- Figur 20:: eine schematische Darstellung einer Teilansicht eines Ausführungsbeispiels eines strukturierten Trägerelements;
- Figur 21:: eine schematische Darstellung eines Teils eines weiteren Ausführungsbeispiels einer Trägereinrichtung eines weiteren Ausführungsbeispiels eines Systems mit Trägereinrichtungsüberzug;
- Figur 22:: eine schematische Darstellung eines Teils eines weiteren Ausführungsbeispiels einer Trägereinrichtung eines weiteren Ausführungsbeispiels eines Systems mit Trägereinrichtungsüberzug;
- Figur 23:: eine schematische Darstellung eines Teils eines weiteren Ausführungsbeispiels einer Trägereinrichtung eines weiteren Ausführungsbeispiels eines Systems mit Trägereinrichtungsüberzug;

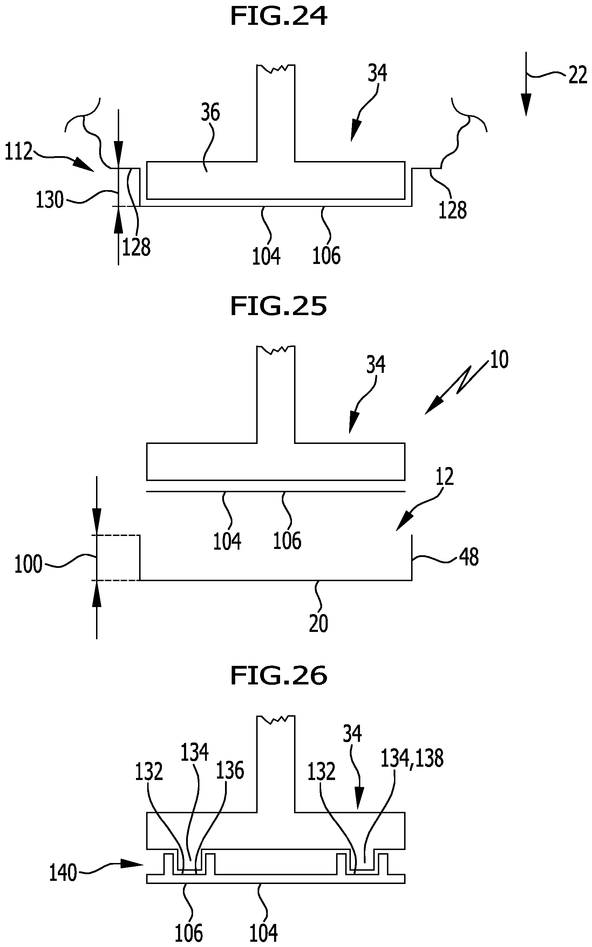

- Figur 24:: eine schematische Darstellung eines Teils eines weiteren Ausführungsbeispiels einer Trägereinrichtung eines weiteren Ausführungsbeispiels eines Systems mit Trägereinrichtungsüberzug;
- Figur 25:: eine schematische Darstellung einer Teilansicht eines weiteren Ausführungsbeispiels eines Systems mit einer Teilansicht einer Trägereinrichtung und eines Behälters;
- Figur 26:: eine schematische Darstellung eines Teils eines weiteren Ausführungsbeispiels einer Trägereinrichtung mit angekoppeltem Trägerelement;

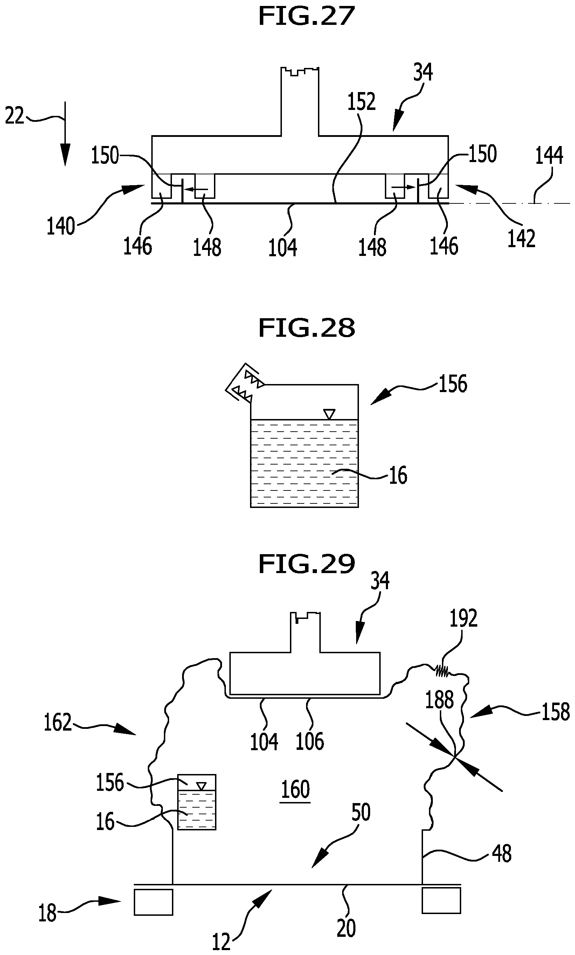

- Figur 27:: eine schematische Darstellung eines Teils eines weiteren Ausführungsbeispiels einer Trägereinrichtung mit angekoppeltem Trägerelement;
- Figur 28:: eine schematische Darstellung eines Ausführungsbeispiels eines Materialbehälters mit verfestigbarem Material;
- Figur 29:: eine schematische Darstellung eines Teils eines weiteren Ausführungsbeispiels eines Systems mit einem Behälter umfassend eine geschlossene Behälterhülle;

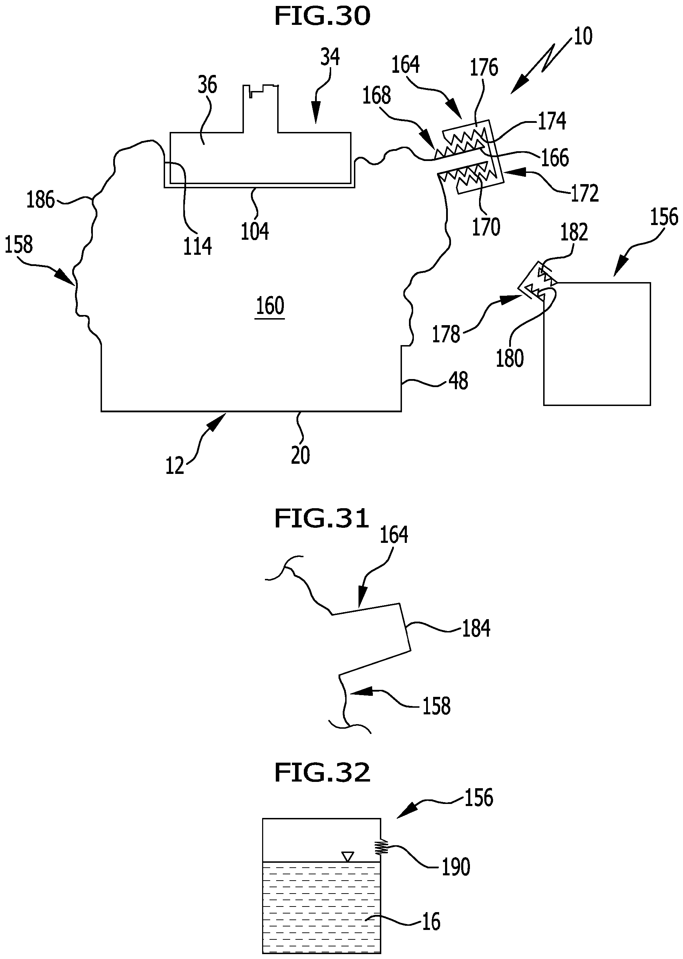

- Figur 30:: eine schematische Darstellung eines Teils eines weiteren Ausführungsbeispiels eines Systems mit einem Behälter umfassend eine geschlossene Behälterhülle;
- Figur 31:: eine schematische Darstellung einer Teilschnittansicht eines weiteren Ausführungsbeispiels eines Behälters mit Behälterhülle mit einer Schnittstelleneinrichtung; und
- Figur 32:: eine schematische Darstellung eines weiteren Ausführungsbeispiels eines Materialbehälters mit Sollbruchstelle.

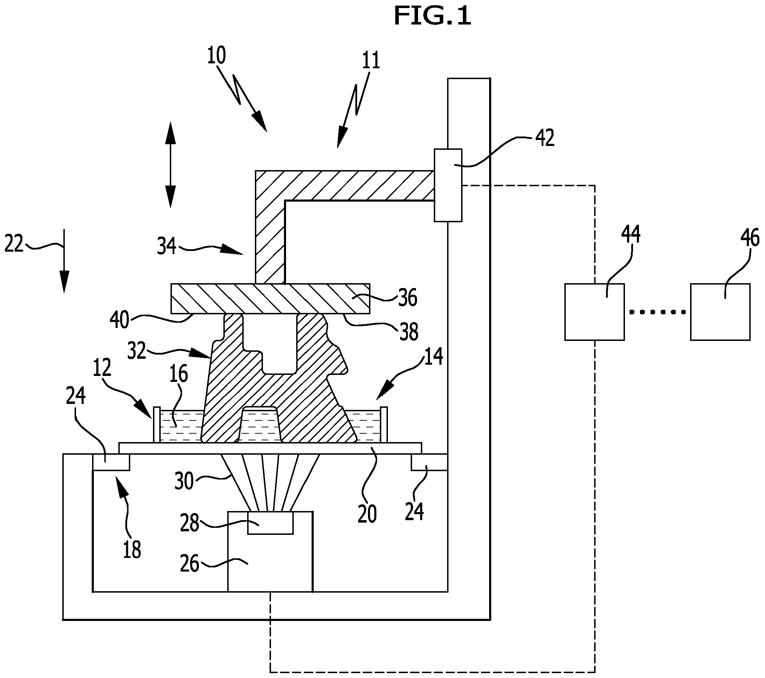

Ein erstes Ausführungsbeispiel eines Systems zum Herstellen eines dreidimensionalen Objekts in Form eines 3D-Druckers 11 ist schematisch in Figur 1 dargestellt und insgesamt mit dem Bezugszeichen 10 bezeichnet.

Es umfasst einen Behälter 12 in Form einer flachen Wanne 14 zum Aufnehmen des verfestigbaren Materials 16. Bei diesem handelt es sich beispielsweise um einen flüssigen Kunststoff, insbesondere ein polymerisierbares Harz, welches durch Beaufschlagen mit Strahlung 30 verfestigbar ist.

Das System 10 umfasst ferner eine Haltevorrichtung 18 zum Halten des Behälters 12 derart, dass sich ein Behälterboden 20 quer, insbesondere senkrecht zur durch den Pfeil 22 symbolisierten Schwerkraftrichtung erstreckt.

Bei bekannten Systemen 10 ist der Behälterboden 20 üblicherweise aus einer Glasplatte ausgebildet, welcher auf Auflagern 24 der Haltevorrichtung 18 aufliegt.

Das System 10 umfasst ferner eine Belichtungseinrichtung 26 zum Belichten des verfestigbaren Materials 16. Hierfür umfasst die Belichtungseinrichtung 26 eine Strahlungsquelle 28 zum Erzeugen von Strahlung 30.

Die Belichtungseinrichtung 26 ist insbesondere derart angeordnet, dass die erzeugte Strahlung 30 durch den Behälterboden 20 hindurch das verfestigbare Material 16 mit der erzeugten Strahlung 30 beaufschlagen kann.

Zum Herstellen eines dreidimensionalen Objekts 32 umfasst das System 10 ferner eine Trägervorrichtung 34, welche beispielsweise eine Halteplatte 36 umfassen kann.

Die Trägervorrichtung 34 ist derart angeordnet, dass die Halteplatte 36 entgegen der Schwerkraftrichtung über dem Behälter 12 angeordnet ist und eine Unterseite 38 der Halteplatte 36 eine Haltefläche 40 definiert, die in Richtung auf den Behälter 12 weisend angeordnet und parallel oder im Wesentlichen parallel zum Behälterboden 20 ausgerichtet ist.

Die Trägervorrichtung 34 ist mit einer Antriebseinrichtung 42 zusammenwirkend angeordnet und ausgebildet, um insbesondere die Halteplatte 36 parallel oder im Wesentlichen parallel zur Schwerkraftrichtung sowie entgegengesetzt zur Schwerkraftrichtung zu verschieben.

Die Antriebseinrichtung 42 und die Belichtungseinrichtung 26 sind mit einer Steuerungseinrichtung 44 steuerungswirksam verbunden. Die Steuerungseinrichtung 44 ist wiederum steuerungswirksam mit einem Computer 46 verbunden.

Vom Computer 46 werden Daten, die das herzustellende dreidimensionale Objekt 32 definieren, in geeigneter Weise an die Steuerungseinrichtung 44 übertragen, so dass die Steuerungseinrichtung 44 die Belichtungseinrichtung 26 entsprechend ansteuern kann, um eine direkt an den Behälterboden 20 angrenzende Schicht des verfestigbaren Materials 16 zu belichten und dadurch zu verfestigen.

Belichtet werden nur die Bereiche der Schicht aus verfestigbarem Material 16, die nach dem Aushärten eine entsprechende Schicht des dreidimensionalen Objekts 32 bilden sollen.

Die erste Schicht, die verfestigt wird, haftet direkt an der Haltefläche 40 der Halteplatte 36 an.

Das dreidimensionale Objekt 32 wird schichtweise oder kontinuierlich ausgebildet durch Aushärten des verfestigbaren Materials 16, wobei die Antriebseinrichtung 42 die Trägervorrichtung 34 schrittweise oder kontinuierlich entgegen der Schwerkraftrichtung vom Behälter 12 weg bewegt, so dass das dreidimensionale Objekt 32 aus dem Behälter 12 heraus ausgebildet wird, wie dies schematisch in Figur 1 dargestellt ist.

Um die Handhabung des Systems 10 zu verbessern und zu vereinfachen, insbesondere im Zusammenhang mit der Handhabung des verfestigbaren Materials sowie mit diesem in Kontakt kommender Komponenten des Systems 10, werden nachfolgend Ausführungsbeispiele weitergebildeter Systeme 10 beschrieben, und zwar insbesondere als Gesamtsystem oder als einzelne Komponenten desselben.

Bei einem Ausführungsbeispiel des Systems 10 umfasst der Behälter 12 einen Behälterboden 20 und eine vom Behälterboden 20 abstehende, umlaufende Behälterwand 48. Der Behälterboden 20 und die Behälterwand 48 begrenzen einen Materialaufnahmeraum 50 zum Aufnehmen des verfestigbaren Materials 16.

Der Behälterboden 20 ist bei einem Ausführungsbeispiel eines Behälters 12 aus einem anderen Material ausgebildet als die Behälterwand 48.

Bei einem weiteren Ausführungsbeispiel eines Behälters 12 ist der Behälterboden 20 elastisch und/oder flexibel ausgebildet sowie ungespannt oder spannungslos mit der Behälterwand 48 verbunden. Ungespannt oder spannungslos bedeutet in diesem Zusammenhang, dass sich der Behälterboden 20 beim Einfüllen des verfestigbaren Materials in den Materialaufnahmeraum 50 in undefinierter Weise verformen würde. Der Behälterboden 20 ist in diesem Fall in seinen Eigenschaften vergleichbar einem Trommelfell, welches vor dem Anbringen und Spannen an einem Trommelgehäuse mehr oder weniger beliebig verformbar ist und erst durch die an der Trommel vorgesehene Spannvorrichtung in definierter Weise aufgespannt wird.

Der Behälterboden 20 ist für die zum Verfestigen des verfestigbaren Materials eingesetzte Strahlung 30 strahlungsdurchlässig ausgebildet. Bei einem Ausführungsbeispiel eines Behälters 12 ist der Behälterboden 20 für elektromagnetische Strahlung 30 in einem Wellenlängenbereich von etwa 200 nm bis etwa 1000 nm durchlässig.

Der Behälterboden 20 ist bei einem Ausführungsbeispiel eines Behälters 12 in Form einer Folie 52 beziehungsweise aus einer Folie 52 ausgebildet.

Der Behälterboden 20 weist bei einem Ausführungsbeispiel eines Behälters 12 eine Dicke 54 in einem Bereich von etwa 0,05 mm bis etwa 3 mm auf. Insbesondere kann der Behälterboden 20 eine Dicke 54 in einem Bereich von etwa 0,07 mm bis etwa 0,3 mm aufweisen.

Bei einem Ausführungsbeispiel eines Behälters 12 ist der Behälterboden 20 aus einem Kunststoff ausgebildet. Der Kunststoff kann insbesondere Polytetrafluorethylen (PTFE), Perfluoralkoxy-Polymer (PFA), Ethylen-Tetrafluorethylen-Copolymer (ETFE) und/oder Tetrafluorethylen-Hexafluorpropylen-Copolymer (FEP) sein oder enthalten.

Der Behälterboden 20 ist bei einem Ausführungsbeispiel eines Behälters 12 in Form eines Trennelements 56 ausgebildet.

Damit der Behälterboden 20 die Funktion eines Trennelements 56 übernehmen kann, welches nicht oder nur schlecht an dem dreidimensionalen Objekt 32 anhaftet, nämlich an der zuletzt verfestigten Schicht desselben, ist der Behälterboden 20 bei einem Ausführungsbeispiel eines Behälters 12 mit einer den Materialaufnahmeraum 50 begrenzenden Antihaftschicht 58 versehen.

Bei einem anderen Ausführungsbeispiel eines Behälters 12 ist der Behälterboden 20 aus einem nicht oder wenig am verfestigten Material 16 anhaftenden Behälterbodenmaterial ausgebildet. Dabei kann es sich insbesondere um dasselbe Material handeln, wie das, aus dem die Antihaftschicht 58 ausgebildet ist.

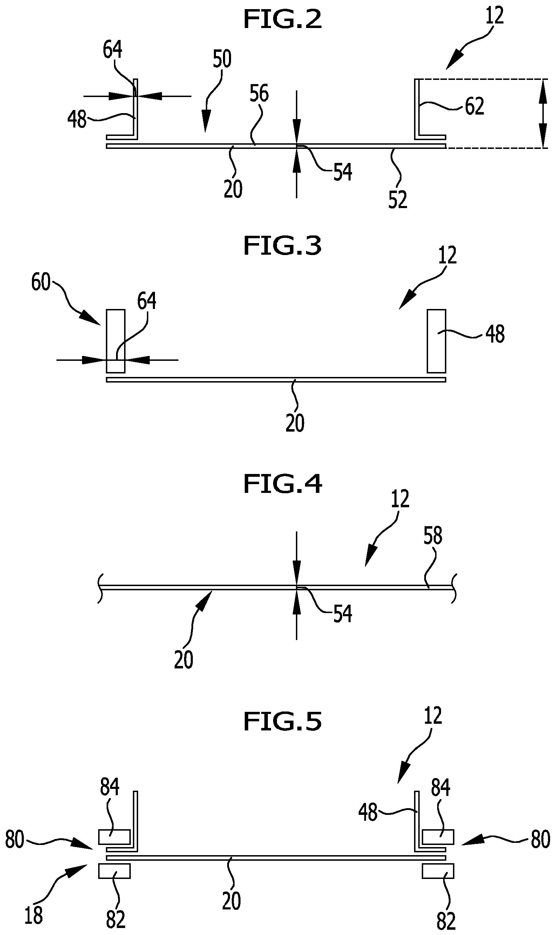

Die Behälterwand 48 ist bei einem Ausführungsbeispiel eines Behälters 12 selbsttragend ausgebildet, und zwar in Form eines in sich geschlossenen, ringförmigen Behälterwandrahmens 60. Ein solches Ausführungsbeispiel ist schematisch in Figur 3 im Schnitt dargestellt.

Alternativ ist die Behälterwand 48 bei einem Ausführungsbeispiel eines Behälters 12 aus einer Folie 62 ausgebildet. Die Folie 62 ist elastisch und/oder flexibel ausgebildet.

Eine Dicke 64 der Behälterwand 48 liegt bei den beschriebenen Ausführungsbeispielen von Behältern 12 in einem Bereich von etwa 0,05 mm bis etwa 1,5 mm. Insbesondere liegt die Dicke 64 in einem Bereich von etwa 0,1 mm bis etwa 0,6 mm.

Die Behälterwand 48 ist bei einem Ausführungsbeispiel eines Behälters 12 aus einem Kunststoff ausgebildet, beispielsweise einem tiefziehfähigen oder strangpressfähigen Kunststoff.

Die Behälterwand 48 und der Behälterboden 20 sind miteinander verbunden. Die Verbindung ist vorzugsweise kraft- und/oder stoff- und/oder formschlüssig realisiert.

Bei einem Ausführungsbeispiel eines Behälters 12 ist eine stoffschlüssige Verbindung mittels einer Verbindungsschicht 66 realisiert. Die Verbindungsschicht 66 kann insbesondere aus einem Kunststoff ausgebildet sein und/oder einen oder mehrere Klebstoffe umfassen.

Bei einem Ausführungsbeispiel eines Behälters 12 ist die Verbindungsschicht 66 in Form eines doppelseitigen Klebebands 68 ausgebildet.

Bei einem weiteren Ausführungsbeispiel eines Behälters 12 ist die Behälterwand 48 hülsenförmig ausgebildet und definiert eine innere Querschnittsfläche 70. Der Behälterboden 20 weist zwei oder mehr voneinander räumlich getrennte Flanschabschnitte 72 auf. Diese weisen insbesondere in voneinander entgegengesetzte Richtungen. Die Flanschabschnitte 72 stehen seitlich über die Behälterwand 48 vor.

Die Behälterwand 48 weist eine dem Behälterboden 20 zugewandtes freies Ende 74 auf, an welchem zwei oder mehr voneinander räumlich getrennte Behälterwandflanschabschnitte 76 angeordnet oder ausgebildet sind, die insbesondere in voneinander entgegengesetzte Richtungen weisen. Die Behälterwandflanschabschnitte 76 erstrecken sich vom Materialaufnahmeraum 50 weg, und zwar parallel und im Wesentlichen parallel zum Behälterboden 20.

Bei einem weiteren Ausführungsbeispiel eines Behälters 12 ist die Behälterwand 48 hülsenförmig ausgebildet und definiert eine innere Querschnittsfläche 70. Der Behälterboden 48 steht seitlich allseitig über die hülsenförmige Behälterwand 48 vor. Ein dem Behälterboden 20 zugewandtes freies Ende 74 der Behälterwand 48 ist in Form eines umlaufenden, sich parallel oder im Wesentlichen parallel zum Behälterboden 20 vom Materialaufnahmeraum 50 weg erstreckenden Behälterwandflansches 78 ausgebildet.

Bei einem Ausführungsbeispiel eines Behälters 12 ist die Verbindungsschicht 66 zwischen den zwei oder mehr Flanschabschnitten 72 und den zwei oder mehr Behälterwandflanschabschnitten 76 angeordnet oder ausgebildet.

Bei einem weiteren Ausführungsbeispiel eines Behälters 12 ist die Verbindungsschicht 66 zwischen dem Behälterboden 20 und dem Behälterwandflansch 78 angeordnet oder ausgebildet.

Ein weiteres Ausführungsbeispiel eines Systems 10 umfasst eine Verbindungsvorrichtung 80 zum kraft- und/oder formschlüssigen Verbinden des Behälterbodens 20 und der Behälterwand 48 in einer Verbindungsstellung.

Bei einem weiteren Ausführungsbeispiel eines Systems 10 umfasst die Verbindungsvorrichtung 80 ein oder mehrere erste Verbindungselement 82 und ein oder mehrere zweite Verbindungselemente 84. Die ersten und zweiten Verbindungselement 82 und 84 sind zusammenwirkend angeordnet zum kraft- und/oder formschlüssigen Verbinden des Behälterbodens 20 und der Behälterwand 48 in der Verbindungsstellung zwischen sich.

Bei einem Ausführungsbeispiel eines Systems 10 ist die Verbindungsschicht 66 in der Verbindungsstellung zwischen den ersten und zweiten Verbindungselementen 82 und 84 angeordnet.

Bei einem weiteren Ausführungsbeispiel eines Systems 10 ist in der Verbindungsstellung zwischen den ersten und zweiten Verbindungselementen 82 und 84 keine Verbindungsschicht 66 des Behälters 12 angeordnet. Die Verbindungselemente 82 und 84 sind in diesem Fall von der Behälterwand 48 weiter weg angeordnet als die Verbindungsschicht 66.

Bei einem weiteren Ausführungsbeispiel eines Systems 10, bei welchem zwischen den Verbindungselementen 82 und 84 keine Verbindungsschicht 66 des Behälters 12 angeordnet ist, ist die Verbindungsschicht 66 von der Behälterwand 48 weiter weg angeordnet als die Verbindungselemente 82 und 84.

Bei einem Ausführungsbeispiel eines Behälters 12 greifen die ersten Verbindungselemente 82 direkt am Behälterboden 20 und die zweiten Verbindungselemente 84 direkt am Behälterwandflansch 78 an.

Bei einem weiteren Ausführungsbeispiel eines Systems 10 greifen die ersten Verbindungselemente 82 direkt oder indirekt an einem oder mehreren Flanschabschnitten 72 an, die zweiten Verbindungselemente 84 greifen in der Verbindungsstellung direkt an einem oder mehreren der zwei Behälterwandflanschabschnitte 76 an.

Bei einem Ausführungsbeispiel eines Systems 10 ist die Verbindungsvorrichtung 80 in Form einer Klemmvorrichtung 86 ausgebildet. Die ersten Verbindungselemente 82 bilden in diesem Fall erste Klemmelemente 88, die zweiten Verbindungselemente 84 zweite Klemmelemente 90.

Bei einem weiteren Ausführungsbeispiel eines Systems 10 ist die Verbindungsvorrichtung 80 in Form einer Spannworrichtung 92 ausgebildet zum ebenen oder gekrümmten Aufspannen des Behälterbodens 20. Wird der Behälterboden 20 eben aufgespannt, definiert er einer Behälterbodenebene 94. Diese verläuft bei einem Ausführungsbeispiel eines Systems 10 senkrecht zur Schwerkraftrichtung.

Die Spannvorrichtung 92 umfasst bei einem Ausführungsbeispiel eines Systems 10 ein oder mehrere erste Spannelemente 96 und ein oder mehrere zweite Spannelemente 98, die zusammenwirkend angeordnet oder ausgebildet sind. Die ein oder mehreren ersten Verbindungselemente 82 bilden oder umfassen die ein oder mehreren ersten Spannelemente 96. Die ein oder mehreren zweiten Verbindungselemente 84 bilden oder umfassen die ein oder mehreren zweiten Spannelemente 98.

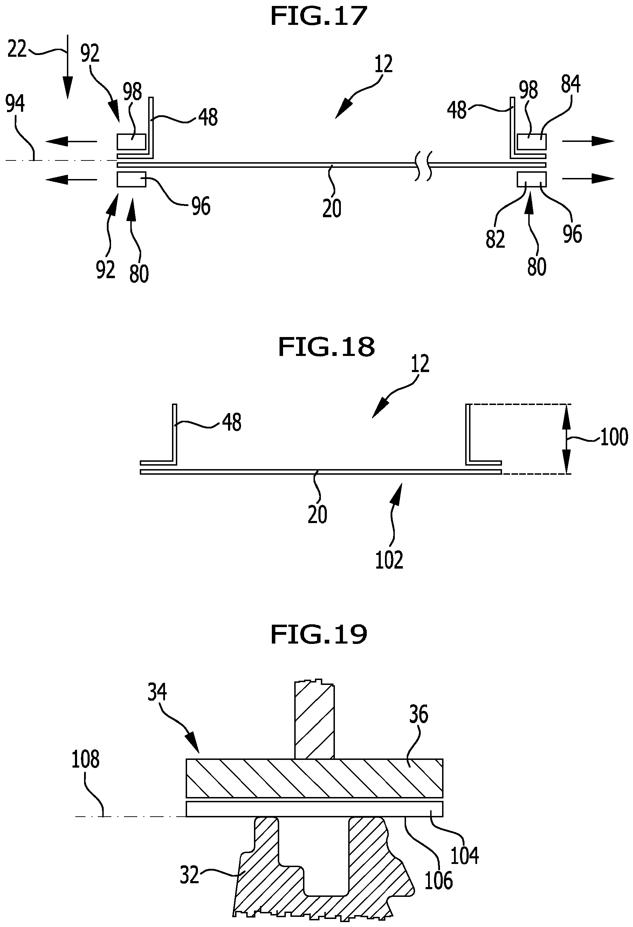

Die Spannvorrichtung 92 ist bei einen Ausführungsbeispiel eines Systems 10 zudem so ausgebildet, dass zusammenwirkende erste und zweite Spannelemente 96 und 98, die an einer Seite des Behälters 12 angreifen, relativ zu anderen Spannelementen 96 und 98, die an einer anderen Stelle am Behälter 12 angreifen, in entgegengesetzter Richtung voneinander weg bewegt werden können, um den Behälterboden zu spannen. Beispielsweise können sie parallel zum Behälterboden 20 voneinander weg bewegt werden. Dies ist schematisch in Figur 17 durch die kleinen Pfeile, die den Spannelementen 96 und 98 zugeordnet sind, dargestellt.

Bei einem Ausführungsbeispiel eines Systems 10 umfasst die Haltevorrichtung 18 die Verbindungsvorrichtung 80. Dies ermöglicht es, den Behälter 12 in der für die Herstellung dreidimensionaler Objekte 32 erforderlichen Weise definiert zu halten und insbesondere die Behälterwand 48 und den Behälterboden 20 bei den beschriebenen Varianten von Behältern 12 miteinander zu verbinden, insbesondere mit und ohne Verbindungsschicht 66, unabhängig davon, wo die Verbindungsschicht 66 konkret angeordnet oder ausgebildet ist.

Die Behälterwand 48 definiert eine Behälterwandhöhe 100, welche einen Wert bei den beschriebenen Ausführungsbeispielen von Behältern 12 in einem Bereich von etwa 1 mm bis etwa 40 mm aufweist. Insbesondere weist sie einen Wert in einem Bereich von etwa 4 mm bis etwa 10 mm auf.

Alle oben beschriebenen Ausführungsbeispiele von Behältern 12 sind vorzugsweise in Form von Einwegbehältern 102 ausgebildet. Die Behälter 12 werden, wenn sie als Einwegbehälter 102 ausgebildet sind, zum Herstellen dreidimensionaler Objekte 32 mit verfestigbarem Material 16 gefüllt. Sind die zu druckenden dreidimensionalen Objekte 32 fertiggestellt, werden die Einwegbehälter 102 nicht gereinigt, sondern beispielsweise mit Strahlung 30 beaufschlagt, um das noch nicht ausgehärtete, verfestigbare Material 16 durchzuhärten. Die Einwegbehälter 102 können dann mit dem ausgehärteten, überschüssigen verfestigbaren Material einfach und umweltgerecht entsorgt werden. Ein aufwendiges Reinigen der Behälter 12 ist so nicht erforderlich.

Bei einem weiteren Ausführungsbeispiel eines Systems 10 zum Herstellen eines dreidimensionalen Objekts 32 umfasst das System 10 ein oder mehrere Trägerelemente 104 zum Halten des aus dem verfestigbaren Material 16 ausgebildeten dreidimensionalen Objekts 32.

Ein Ausführungsbeispiel eines Trägerelements 104 ist ausgebildet zum lösbaren Koppeln mit der Trägervorrichtung 34 des Systems 10 in einer Kopplungsstellung.

Das Trägerelement 104 definiert eine von der Trägervorrichtung 34 weg weisende Haltefläche 106, an welcher das dreidimensionale Objekt 32 gehalten ist. Die Haltefläche 106 ist aus einem Kunststoff ausgebildet.

Bei einem Ausführungsbeispiel eines Trägerelements 104 definiert die Haltefläche 106 eine Halteflächenebene 108.

Die Haltefläche 106 ist bei einem Ausführungsbeispiel eines Trägerelements 104 strukturiert ausgebildet. Sie weist eine Mehrzahl von Stabilisierungsnuten 110 auf, um das Trägerelement selbstragend auszubilden.

Ein Ausführungsbeispiel eines Systems 10 umfasst einen Trägereinrichtungsüberzug 112 für die Trägereinrichtung 34. Der Trägereinrichtungsüberzug 112 umfasst bei einem Ausführungsbeispiel das Trägerelement 104.

Ein Ausführungsbeispiel eines Trägereinrichtungsüberzugs 112 definiert eine Trägereinrichtungsaufnahme 114, in die die Trägereinrichtung 34 ganz oder teilweise formschlüssig oder im Wesentlichen formschlüssig in der Kopplungsstellung eingeführt ist. Insbesondere greift die Halteplatte 36 in die Trägereinrichtungsaufnahme 114 ein.

Ein Ausführungsbeispiel eines Trägereinrichtungsüberzugs 112 ist in Form eines Überziehers 116 ausgebildet, welcher die Trägereinrichtungsaufnahme 114 umfasst oder definiert.

Ein weiteres Ausführungsbeispiel eines Trägereinrichtungsüberzugs 112 ist in Form eines Tiefziehblisters 118 ausgebildet, welcher die Trägereinrichtungsaufnahme 114 umfasst oder definiert. Der Tiefziehblister kann insbesondere derart ausgebildet sein, dass er auf die Halteplatte 36 der Trägereinrichtung 34 aufgeclipst werden kann. Dies kann beispielsweise durch einen umlaufenden, rückspringenden Rand 120 erreicht werden, welcher flanschartig die Halteplatte 36 in der Kopplungsstellung hintergreift.

Alle beschriebenen Ausführungsbeispiele von Trägereinrichtungsüberzügen 112 sind vorzugsweise aus einem Kunststoff ausgebildet.

Bei einem Ausführungsbeispiel eines Systems 10 sind das oder die Trägerelemente 104 ebenfalls aus einem Kunststoff ausgebildet.

Bei einem Ausführungsbeispiel eines Systems 10 ist das Trägerelement 104 einstückig ausgebildet.

Ein weiteres Ausführungsbeispiel eines Trägereinrichtungsüberzugs 112 einstückig ausgebildet.

Ein weiteres Ausführungsbeispiel eines Trägerelements 104 ist in Form einer Folie 121 oder aus einer Folie 122 ausgebildet.

Das Trägerelement 104 ist bei einem Ausführungsbeispiel elastisch und/oder flexibel ausgebildet.

Die beschriebenen Ausführungsbeispiele von Trägerelementen 104 weisen eine Dicke 124 in einem Bereich von etwa 0,1 mm bis etwa 0,8 mm. Insbesondere liegt eine Dicke 124 in einem Bereich von etwa 0,1 bis etwa 0,5 mm.

Ein Ausführungsbeispiel eines Trägereinrichtungsüberzugs 112 weist einen umlaufenden, radial abstehenden Rückhalteflansch 126 auf, welcher in der Kopplungsstellung quer, insbesondere senkrecht, zur Schwerkraftrichtung verläuft.

Ein Ausführungsbeispiel eines Trägereinrichtungsüberzugs 112 weist eine umlaufende, radial vorspringende Rückhaltekante 128 auf, welche in der Kopplungsstellung quer, insbesondere senkrecht, zur Schwerkraftrichtung 22 verläuft.

Bei einem Ausführungsbeispiel des Systems 10 ist das Trägerelement 104 dem Behälterboden 20 des Behälters 12 gegenüberliegend oder im Wesentlichen gegenüberliegend angeordnet oder ausgebildet.

Es versteht sich von selbst, dass alle oben beschriebenen Ausführungsbeispiele von Behältern 12 beliebig mit allen oben beschriebenen Ausführungsbeispielen von Trägerelementen 104 beziehungsweise Trägereinrichtungsüberzügen 112 kombiniert werden können.

Die Haltefläche 106 des Trägerelements 104 ist bei einem Ausführungsbeispiel eines Systems 10 in Richtung oder im Wesentlichen in Richtung auf den Behälterboden 20 hin weisend angeordnet oder ausgebildet.

Wie bereits oben beschrieben, sind das Trägerelement 104 und der Behälterboden 20 bei einem Ausführungsbeispiel eines Systems 10 relativ zueinander bewegbar angeordnet oder ausgebildet.

Bei einem Ausführungsbeispiel eines Systems 10 weisen der Rückhalteflansch 126 beziehungsweise die Rückhaltekante 128 einen Rückhalteabstand 130 von der Haltefläche 106 auf, welcher mindestens etwa der Behälterhöhe 104 entspricht. Dies stellt sicher, dass selbst dann, wenn der Trägereinrichtungsüberzug 112 so weit in den Behälter 12 eintaucht, dass die Haltefläche 106 den Behälterboden 20 berührt, der Rückhalteflansch 126 beziehungsweise die Rückhaltekante 128 nicht oder nur wenig mit dem im Materialaufnahmeraum 50 aufgenommenen verfestigbaren Materials 16 in Kontakt kommen können. Ein Umströmen, beispielsweise der Halteplatte 36, der Trägereinrichtung 34 kann auf diese Weise wirksam verhindert werden.

Bei einem Ausführungsbeispiel eines Systems 10 umfasst das Trägerelement 104 ein oder mehrere erste Trägerelementkopplungselemente 132, welche in der Kopplungsstellung mit einem oder mehreren zweiten Trägerelementkopplungselementen 134 der Trägereinrichtung 34 kraft- und/oder formschlüssig in Eingriff stehen.

Bei einem Ausführungsbeispiel eines Trägerelements 104 ist jedes erste Trägerelementkopplungselement 132 wahlweise in Form eines Kopplungsvorsprungs oder in Form einer Kopplungsausnehmung 136 ausgebildet. Jedes zweite Trägerelementkopplungselement 134 ist korrespondierend zum jeweiligen ersten Trägerelementkopplungselement 132 entweder in Form einer Kopplungsausnehmung oder in Form eines Kopplungsvorsprungs 138 ausgebildet.

Bei einem Ausführungsbeispiel eines Systems 10 sind das Trägerelement 104 und die Trägereinrichtung 34 in der Kopplungsstellung klemmend und/oder rastend und/oder klebend miteinander gekoppelt. Hierfür kann das System 10 insbesondere eine Trägerelementkopplungsvorrichtung 140 umfassen zum kraft- und/oder form- und/oder stoffschlüssigen Koppeln des einen oder der mehreren Trägerelemente 104 und der Trägereinrichtung 34 in der Kopplungsstellung.

Bei einem Ausführungsbeispiel eines Systems 10 umfasst die Trägerelementkopplungsvorrichtung 140 die ersten und zweiten Trägerelementkopplungselemente 132 und 134, welche zusammenwirkend angeordnet und ausgebildet sind zum kraft- und/oder form- und/oder stoffschlüssigen Koppeln des Trägerelements 104 und der Trägereinrichtung 34 in der Kopplungsstellung.

Bei einem Ausführungsbeispiel eines Systems 10 umfasst die Trägerelementkopplungsvorrichtung 140 eine Klemmeinrichtung 142 zum klemmenden Fixieren des Trägerelements 104 an der Trägereinrichtung 34 in einer Trägerelementebene 144.

Die Trägerelementebene 144 verläuft bei einem Ausführungsbeispiel eines Systems 10 vorzugsweise quer, insbesondere senkrecht zur Schwerkraftrichtung 22.

Die Klemmeinrichtung 142 kann insbesondere mehrere erste Klemmglieder 146 und mehrere zweite Klemmglieder 148 umfassen, die jeweils zusammenwirkend angeordnet und ausgebildet sind. Insbesondere sind die ersten und zweiten Klemmglieder 146 und 148 relativ zueinander bewegbar angeordnet oder ausgebildet, so dass beispielsweise ein Haltevorsprung 150, welcher vom Trägerelement 104 von einer Rückseite 152 desselben absteht, zwischen jeweils ein erstes Klemmglied 146 und ein zweites Klemmglied 148 einführbar ist. Diese können dann aufeinander zu bewegt werden, um den Haltevorsprung 150 zwischen sich zu klemmen.

In der beschriebenen Weise kann die Klemmeinrichtung 142 insbesondere auch derart ausgebildet sein, dass das Trägerelement 104, insbesondere wenn es aus einer Folie 122 ausgebildet ist, an der Trägereinrichtung 134 unter Spannung gehalten werden kann.

Ist das Trägerelement 104 mit der Trägereinrichtung 34 gekoppelt, kann das Trägerelement 104 zusammen mit der Trägereinrichtung 34 mittels der Antriebseinrichtung 42 in einer Richtung parallel oder im Wesentlichen parallel zur Schwerkraftrichtung und entgegen der Schwerkraftrichtung bewegt werden.

Insbesondere ist es auf diese Weise möglich, mit der Antriebseinrichtung 42 das Trägerelement 104 in der Kopplungsstellung parallel oder im Wesentlichen parallel zur Schwerkraftrichtung in Richtung auf den Behälterboden 20 hin und vom Behälterboden 20 weg zu bewegen.

Alle beschriebenen Ausführungsbeispiele von Trägerelementen 104 können insbesondere als Einwegträgerelemente 154 ausgebildet sein. Sind sie beispielsweise einstückig mit dem Trägereinrichtungsüberzug 112 ausgebildet, ist dann auch der Trägereinrichtungsüberzug für den Einmalgebrauch oder zum Einsatz für einige wenige Druckvorgänge ausgebildet.

Alle Ausführungsbeispiele von Trägerelementen 104 lassen sich in der beschriebenen Weise einfach und sicher mit der Trägereinrichtung 34 in der Kopplungsstellung koppeln. Das dreidimensionale Objekt 32 kann dann in bekannter Weise ausgebildet werden durch Aushärten des verfestigbaren Materials 16. Ist das dreidimensionale Objekt 32 fertiggestellt, wird das Trägerelement 104 von der Trägereinrichtung 34 abgekoppelt. Die Trägereinrichtung 34 ist dann idealerweise nicht mit dem verfestigbaren Material 16 kontaminiert und muss daher nicht gereinigt werden.

Das fertiggestellte dreidimensionale Objekt 32 kann nun vom Trägerelement 104 entfernt werden. Nicht ausgehärtetes verfestigbares Material, welches am Trägerelement 104 oder am Trägereinrichtungsüberzug 112 anhaftet, kann durch zusätzliche Belichtung mit der Strahlung 30 ausgehärtet werden. Das Einwegträgerelement 154 kann dann nach dem Aushärten des überschüssigen, nicht verfestigbaren Materials einfach, sicher und insbesondere umweltgerecht entsorgt werden. Ein Reinigen des Trägerelements 104 erübrigt sich in diesem Fall.

Zur Ausbildung des nächsten dreidimensionalen Objekts wird ein neues Trägerelement 104 beziehungsweise ein neuer Trägereinrichtungsüberzug 112 mit der Trägereinrichtung gekoppelt.

Die bisher beschriebenen Ausführungsbeispiele von Behältern 12 und Trägerelementen 104 beziehungsweise Trägereinrichtungsüberzügen 112 sind getrennt voneinander ausgebildet und bilden eigenständige Komponenten. Dies bedeutet, dass die Behälter 12 getrennt von den Trägerelementen 104 beziehungsweise den Trägereinrichtungsüberzügen 112 ins System 10 eingesetzt werden können. Dadurch ergibt sich eine beliebige Kombinationsmöglichkeit zwischen den oben beschriebenen Ausführungsbeispielen von Trägerelementen 104 beziehungsweise Trägereinrichtungsüberzügen 112 und Behältern 12.

Das verfestigbare Material 16 kann insbesondere in einem Materialbehälter 156 bereitgestellt werden. Das verfestigbare Material 16 kann dann je nach Bedarf aus dem Materialbehälter 156 in die Materialaufnahme 50 des Behälters 12 eingefüllt werden.

Bei einem weiteren Ausführungsbeispiel eines Systems 10 ist eine Behälterhülle 158 vorgesehen, welche einen Behälterinnenraum 160 definiert. Der Behälter 12 selbst bildet einen Teil der Behälterhülle 58, so dass der Behälterinnenraum 160 den Materialaufnahmeraum 50 umfasst. Die Behälterhülle 158 ist geschlossen ausgebildet und umfasst ferner das Trägerelement 104, dessen Haltefläche 106 den Behälterinnenraum 160 begrenzt.

Einen Behälter 12 mit der beschriebenen Behälterhülle 158 auszubilden ermöglicht es, das dreidimensionale Objekt 32 von der Behälterhülle 158 vollständig umschlossen auszubilden. Es wird so quasi eine Kapsel 162 ausgebildet, in der die Herstellung des dreidimensionalen Objekts 32 durchgeführt wird.

Bei einem Ausführungsbeispiel eines Behälters 12 bilden der Behälterboden und die Behälterwand einen Teil der Behälterhülle 158.

Bei einem Ausführungsbeispiel nicht gemäß der beanspruchten Erfindung eines Behälters 12 ist die Behälterhülle 158 vollständig geschlossen. Im Behälterinnenraum 160 ist ein Materialbehälter 156 angeordnet, welcher das verfestigbare Material 16 enthält. Dieser kann beispielsweise mit einer Sollbruchstelle ausgestattet sein, und dann, wenn die Behälterhülle 158 mit dem Trägerelement 104 an die Trägereinrichtung 134 gekoppelt und der Behälter 12 an der Haltevorrichtung 18 gehalten sind, geöffnet werden kann, um das verfestigbare Material 16 in den Materialaufnahmeraum 50 einzubringen. Das dreidimensionale Objekt 32 kann nun in bekannter Weise ausgebildet werden. Ist das dreidimensionale Objekt 32 fertig ausgebildet, kann die Behälterhülle 158 insgesamt wieder aus dem System 10 entnommen werden.

Zum Entnehmen des dreidimensionalen Objekts 32 wird die Behälterhülle 158 beispielsweise irreversibel zerstört. Nicht verfestigtes verfestigbares Material 16 kann dann durch geeignete Belichtung komplett ausgehärtet werden, so dass der Behälter 12 insbesondere in Form eines Einwegbehälters 102, welcher die Behälterhülle 158 umfasst, ausgebildet werden kann. Der Einwegbehälter 102 kann dann wie bereits oben beschrieben sicher und vor allem umweltgerecht entsorgt werden.

Der Behälter 12 mit der Behälterhülle 158 kann insbesondere in Form eines der oben beschriebenen Ausführungsbeispiele von Behältern 12 ausgebildet sein. Ferner kann auch das Trägerelement 104 in Form eines der oben beschriebenen Ausführungsbeispiele ausgebildet sein. Mithin lassen sich also beliebige Kombinationen von Ausführungsbeispielen von Behältern 12 und Trägerelementen 104 miteinander kombinieren und mittels einer Behälterhülle 158 zu einer geschlossenen Kapsel 162 ausbilden.

Gemäß der beanspruchten Erfindung umfasst der Behälter 12 eine an der Behälterhülle 158 angeordnete oder ausgebildete Schnittstelleneinrichtung 164 zum Einbringen des verfestigbaren Materials 16 durch die Behälterhülle 158 hindurch in den Behälterinnenraum 160 hinein.

Bei einem Ausführungsbeispiel eines Behälters 12 umfasst die Schnittstelleneinrichtung 164 eine Öffnung 166. Beispielsweise kann diese an einem Anschlussstutzen 168 ausgebildet sein, welcher hülsenförmig ausgebildet ist und ein Außengewinde 170 aufweist.

Zum Verschließen der Öffnung 166 ist bei einem Ausführungsbeispiel eines Behälters 12 ein Verschlusselement 172 vorgesehen, welches einen mit einem Innengewinde 174 versehenen Schraubanschluss 176 aufweist, welches Innengewinde 174 zum Außengewinde 170 korrespondierend ausgebildet ist.

Statt des Außengewindes 170, welches einen Gewindeabschnitt bildet, kann die Schnittstelleneinrichtung 164 auch in Form eines Bajonettanschlusses zum lösbaren Verbinden mit einer korrespondierenden Materialbehälterschnittstelleneinrichtung 178 ausgebildet sein.

Bei einem Ausführungsbeispiel eines Materialbehälters 156 ist die Materialbehälterschnittstelleneinrichtung 178 in Form eines mit einem Innengewinde 180 versehen Ausfüllstutzen 182 versehen sein, wobei das Innengewinde 180 korrespondierend zum Außengewinde 170 der Schnittstelleneinrichtung 164 ausgebildet ist. Der Materialbehälter 156 kann so insbesondere an die Behälterhülle 158 angeschraubt werden. So lässt sich insbesondere eine fluiddichte, also flüssigkeitsdichte und/oder gasdichte, Verbindung zwischen dem Materialbehälter 156 und der Behälterhülle 148 in einer Befüllstellung ausbilden, so dass das verfestigbare Material 16 einfach und sicher in den Materialaufnahmeraum 50 im Behälterinnenraum 160 eingebracht werden kann.

Bei einem weiteren Ausführungsbeispiel eines Behälters 12 umfasst die Schnittstelleneinrichtung 164 eine Membran 184. Diese kann insbesondere mit einer Kanüle durchstechbar ausgebildet sein, um auf diese Weise das verfestigbare Material in den Behälterinnenraum 160 einbringen zu können.

Die Schnittstelleneinrichtung 164 ist bei einem Ausführungsbeispiel eines Behälters 12 vom Behälterboden 20 beabstandet angeordnet oder ausgebildet. Insbesondere ist sie bei einem Ausführungsbeispiel eines Behälters 12 nicht an der Behälterwand 48 angeordnet oder ausgebildet.

Bei einem weiteren Ausführungsbeispiel eines Behälters 12 ist die Schnittstelleneinrichtung 164 in oder an der Behälterwand 48 angeordnet oder ausgebildet.

Die Behälterhülle 158 ist bei einem Ausführungsbeispiel eines Behälters 12 aus einer Folie 186 ausgebildet.

Die Folie 186 ist bei einem Ausführungsbeispiel eines Behälters 12 elastisch und/oder flexibel ausgebildet.

Die Behälterhülle 158 weist bei den beschriebenen Ausführungsbeispielen von Behältern 12 eine Dicke 188 in einem Bereich von etwa 0,05 mm bis etwa 1,5 mm auf. Insbesondere weist sie eine Dicke 188 in einem Bereich von etwa 0,1 mm bis etwa 0,6 mm auf.

Die Behälterhülle 158 ist bei einem Ausführungsbeispiel eines Behälters 12 aus einem Kunststoff ausgebildet.

Die Behälterhülle ist bei einem Ausführungsbeispiel eines Behälters 12 einstückig ausgebildet.

Bei einem weiteren Ausführungsbeispiel eines Behälters 12 ist die Behälterhülle 158 bis auf den Behälterboden 20, also mit Ausnahme des Behälterbodens 20, einstückig ausgebildet. Auf diese Weise kann dann der Behälter 12 wie oben bei verschiedenen Ausführungsbeispielen von Behältern 12 beschrieben derart ausgebildet sein, dass der Behälterboden 20 und die Behälterwand 48 aus einem jeweils anderen Material ausgebildet sind.

Die Behälterhülle 158 ist bei einem Ausführungsbeispiel eines Behälters 12 derart ausgebildet, dass das Trägerelement 104 dem Behälterboden 20 gegenüberliegend oder im Wesentlichen gegenüberliegend angeordnet oder ausgebildet ist. Dementsprechend ist dann auch die Haltefläche 106 in Richtung oder im Wesentlichen in Richtung auf den Behälterboden 20 hin weisend angeordnet oder ausgebildet.

Die Behälterhülle 158 umfasst bei einem Ausführungsbeispiel eines Behälters 12 eines der oben beschriebenen Ausführungsbeispiele von Trägereinrichtungsüberzügen 112. Insbesondere ist der Trägereinrichtungsüberzug 112 integraler Bestandteil der Behälterhülle 158.

Bei einem weiteren Ausführungsbeispiel eines Systems 10 ist ein Materialbehälter 156 mit einer Sollbruchstelle 190 ausgestattet, die zum Öffnen des Materialbehälters 156 irreversibel zerstört werden kann.

Bei einem weiteren Ausführungsbeispiel eines Behälters 12 ist die Behälterhülle 158 zum Entnehmen des verfestigten dreidimensionalen Objekts nur durch Zerstören öffenbar. Eine solche Behälterhülle 158 kann insbesondere eine Behälterhüllensollbruchstelle 192 aufweisen, welche irreversibel zerstört werden kann, um die Behälterhülle 158 zum Entnehmen des dreidimensionalen Objekts 32 zu Öffnen.

Bei einem weiteren Ausführungsbeispiel eines Behälters 12 ist die Behälterhülle 158 mit Ausnahme des Behälterbodens 20 für die zum Verfestigen des verfestigbaren Materials 16 eingesetzte Strahlung 30 undurchlässig oder im Wesentlichen undurchlässig ausgebildet. Insbesondere ist die Behälterhülle 158 für elektromagnetische Strahlung 30 in einem Wellenlängenbereich von 200 nm bis etwa 1000 nm undurchlässig ausgebildet.

Bei einem weiteren Ausführungsbeispiel eines Behälters 12 ist die Behälterhülle 158 mit Ausnahme des Behälterbodens 20 aus einem Behälterhüllenmaterial ausgebildet, welches einen Transmissionsgrad von maximal 10 % für die zum Verfestigen des verfestigbaren Materials 16 eingesetzte Strahlung 30 aufweist. Insbesondere kann der Transmissionsgrad maximal 1 % betragen.

Die oben beschriebenen Ausführungsbeispiele von Systemen 10 sowie einzelner Komponenten desselben, also insbesondere die beschriebenen Ausführungsbeispiele von Behältern 12 und Trägerelementen 104 sowie Trägereinrichtungsüberzügen 112, können, soweit sich dies nicht aufgrund einer konkreten Konstruktion unmittelbar ausschließt, beliebig miteinander kombiniert werden.

Alle beschriebenen Ausführungsbeispiele von Systemen 10 beziehungsweise von Komponenten solcher Systeme 10 ermöglichen eine verbesserte Handhabung dieser Systeme 10 und dessen Komponenten zum Herstellen dreidimensionaler Objekte 32. Insbesondere haben sie den Vorteil, dass ein Reinigungsaufwand deutlich reduziert werden kann oder dass eine Reinigung der Systeme 10 beziehungsweise von Komponenten desselben die mehrfach eingesetzt werden, überhaupt nicht mehr erforderlich ist.

Insbesondere kann beim Einsatz eines Behälters 12 mit einer Behälterhülle 158 auch eine praktisch geruchsfreie Nutzung des Systems 10 ermöglicht werden. Dies ist insbesondere dann vorteilhaft, wenn das verfestigbare Material 16 sehr stark riecht oder gesundheitsschädliche Gase absondert.

### Bezugszeichenliste

- 10: System
- 12: Behälter
- 14: Wanne
- 16: Material
- 18: Haltevorrichtung
- 20: Behälterboden
- 22: Pfeil
- 24: Auflager
- 26: Belichtungseinrichtung
- 28: Strahlungsquelle
- 30: Strahlung
- 32: dreidimensionales Objekt
- 34: Trägervorrichtung
- 36: Halteplatte
- 38: Unterseite
- 40: Haltefläche
- 42: Antriebseinrichtung
- 44: Steuerungseinrichtung
- 46: Computer
- 48: Behälterwand
- 50: Materialaufnahmeraum
- 52: Folie
- 54: Dicke
- 56: Trennelement
- 58: Antihaftschicht
- 60: Behälterwandrahmen
- 62: Folie
- 64: Dicke
- 66: Verbindungsschicht
- 68: Klebeband
- 70: Querschnittsfläche
- 72: Flanschabschnitt
- 74: Ende
- 76: Behälterwandflanschabschnitt
- 78: Behälterwandflansch
- 80: Verbindungsvorrichtung
- 82: erstes Verbindungselement
- 84: zweites Verbindungselement
- 86: Klemmvorrichtung
- 88: erstes Klemmelement
- 90: zweites Klemmelement
- 92: Spannvorrichtung
- 94: Behälterbodenebene
- 96: erstes Spannelement
- 98: zweites Spannelement
- 100: Behälterwandhöhe
- 102: Einwegbehälter
- 104: Trägerelement
- 106: Haltefläche
- 108: Halteflächenebene
- 110: Stabilisierungsnut
- 112: Trägereinrichtungsüberzug
- 114: Trägereinrichtungsaufnahme
- 116: Überzieher
- 118: Tiefziehblister
- 120: Rand
- 122: Folie
- 124: Dicke
- 126: Rückhalteflansch
- 128: Rückhaltekante
- 130: Rückhalteabstand
- 132: erstes Trägerelementkopplungselement
- 134: zweites Trägerelementkopplungselement
- 136: Kopplungsausnehmung
- 138: Kopplungsvorsprung
- 140: Trägerelementkopplungsvorrichtung
- 142: Klemmeinrichtung
- 144: Trägerelementebene
- 146: erstes Klemmglied
- 148: zweites Klemmglied
- 150: Haltevorsprung
- 152: Rückseite
- 154: Einwegträgerelement
- 156: Materialbehälter
- 158: Behälterhülle
- 160: Behälterinnenraum
- 162: Kapsel
- 164: Schnittstelleneinrichtung
- 166: Öffnung
- 168: Anschlussstutzen
- 170: Außengewinde
- 172: Verschlusselement
- 174: Innengewinde
- 176: Schraubanschluss
- 178: Materialbehälterschnittstelleneinrichtung
- 180: Innengewinde
- 182: Ausfüllstutzen
- 184: Membran
- 186: Folie
- 188: Dicke
- 190: Sollbruchstelle
- 192: Behälterhüllensollbruchstelle

## Patentansprüche

1. System (10) zum Herstellen eines dreidimensionalen Objekts (32) durch Verfestigen, insbesondere schichtweise oder kontinuierlich, eines unter Einwirkung von Strahlung (30) verfestigbaren Materials (16), welches System (10) einen Behälter (12) zum Aufnehmen des verfestigbaren Materials (16) umfasst, in welchem Behälter (12) das verfestigbare Material (16) durch Einwirkung von Strahlung (30) zum Herstellen des dreidimensionalen Objekts (32) schichtweise oder kontinuierlich verfestigbar ist, wobei der Behälter (12) einen Behälterboden (20) und eine vom Behälterboden (20) abstehende, umlaufende Behälterwand (48) umfasst, wobei der Behälterboden (20) und die Behälterwand (48) einen Materialaufnahmeraum (50) zum Aufnehmen des verfestigbaren Materials (16) begrenzen, wobei der Behälter (12) einen von einer Behälterhülle (158) umgebenen Behälterinnenraum (160) definiert, wobei der Behälterinnenraum (160) den Materialaufnahmeraum (50) umfasst ist, wobei die Behälterhülle (158) geschlossen ist und wobei die Behälterhülle (158) ein Trägerelement (104) umfasst, welches eine Haltefläche (106) zum Halten des aus dem verfestigbaren Material (16) ausgebildeten dreidimensionalen Objekts (32) definiert, wobei der Behälter (12) eine an der Behälterhülle (158) angeordnete Schnittstelleneinrichtung (164) zum Einbringen des verfestigbaren Materials (16) durch die Behälterhülle (158) in den Behälterinnenraum (160) hinein aufweist und wobei die Schnittstelleneinrichtung (164) vom Behälterboden (20) beabstandet angeordnet oder ausgebildet ist, **dadurch gekennzeichnet, dass** die Schnittstelleneinrichtung (164) eine Membran, insbesondere durchstechbar, und/oder einen Gewindeabschnitt (170) oder einen Bajonettanschluss zum lösbaren Verbinden mit einer korrespondierenden Materialbehälterschnittstelleneinrichtung (178) eines mit verfestigbarem Material (16) befüllten Materialbehälters (156) umfasst.

2. System nach Anspruch 1, **dadurch gekennzeichnet, dass** der Behälterboden (20) und/oder die Behälterwand (48) einen Teil der Behälterhülle (158) bilden.

3. System nach einem der voranstehenden Ansprüche, **dadurch gekennzeichnet, dass** die Schnittstelleneinrichtung (164) nicht in der Behälterwand (48) oder in oder an der Behälterwand (48) angeordnet oder ausgebildet ist.

4. System nach einem der voranstehenden Ansprüche, **dadurch gekennzeichnet, dass** der Behälterboden (20)
a) aus einem anderen Material ausgebildet ist als die Behälterwand (48)
und/oder
b) für die zum Verfestigen des verfestigbaren Materials (16) eingesetzte Strahlung (30) strahlungsdurchlässig ausgebildet ist, insbesondere für elektromagnetische Strahlung (30) in einem Wellenlängenbereich von etwa 200 nm bis etwa 1000 nm,
und/oder
c) in Form eines Trennelements (56) ausgebildet ist
und/oder
d) mit einer den Materialaufnahmeraum (50) begrenzenden Antihaftschicht (58) versehen ist oder dass der Behälterboden (20) aus einem nicht oder wenig am verfestigten Material (16) anhaftenden Behälterbodenmaterial ausgebildet ist.

5. System nach einem der voranstehenden Ansprüche, **dadurch gekennzeichnet, dass** der Behälterboden (20)
a) in Form einer Folie (62) oder aus einer Folie (62) ausgebildet ist
und/oder
b) elastisch und/oder flexibel ausgebildet ist
und/oder
c) eine Dicke (64) in einem Bereich von etwa 0,05 mm bis etwa 3 mm aufweist, insbesondere in einem Bereich von etwa 0,07 mm bis etwa 0,3 mm,
und/oder
d) aus einem Kunststoff, insbesondere aus Polytetrafluorethylen (PTFE), Perfluoralkoxy-Polymer (PFA), Ethylen-Tetrafluorethylen-Copolymer (ETFE) und/oder Tetrafluorethylen-Hexafluorpropylen-Copolymer (FEP), ausgebildet ist.

6. System nach einem der voranstehenden Ansprüche, **dadurch gekennzeichnet, dass** die Behälterwand (48)
a) sich senkrecht oder im Wesentlichen senkrecht vom Behälterboden (20) weg erstreckt
und/oder
b) selbsttragend ausgebildet ist, insbesondere in Form eines in sich geschlossenen ringförmigen Behälterwandrahmens (60).

7. System nach einem der voranstehenden Ansprüche, **dadurch gekennzeichnet, dass** die Behälterhülle (158)
a) mindestens teilweise aus einer Folie (186) ausgebildet ist, wobei insbesondere die Folie (186) elastisch und/oder flexibel ausgebildet ist
und/oder
b) eine Dicke (188) in einem Bereich von etwa 0,05 mm bis etwa 1,5 mm aufweist, insbesondere in einem Bereich von etwa 0,1 mm bis etwa 0,6 mm,
und/oder
c) aus einem Kunststoff ausgebildet ist
und/oder
d) einstückig ausgebildet ist, insbesondere bis auf den Behälterboden (20).

8. System nach einem der voranstehenden Ansprüche, **dadurch gekennzeichnet, dass**
a) das Trägerelement (104) dem Behälterboden (20) gegenüberliegend oder im Wesentlichen gegenüberliegend angeordnet oder ausgebildet ist
und/oder
b) die Haltefläche (106) in Richtung oder im Wesentlichen in Richtung auf den Behälterboden (20) hin weisend angeordnet oder ausgebildet ist.

9. System nach einem der voranstehenden Ansprüche, **dadurch gekennzeichnet, dass** das Trägerelement (104) ausgebildet ist zum lösbaren Koppeln mit einer bewegbar ausgebildeten oder angeordneten Trägervorrichtung (34) des Systems (10) in einer Kopplungsstellung, wobei insbesondere
a) das Trägerelement (104) mindestens ein erstes Trägerelementkopplungselement (132) umfasst, welches in der Kopplungsstellung mit mindestens einem zweiten Trägerelementkopplungselement (134) der Trägervorrichtung (34) kraft- und/oder formschlüssig in Eingriff steht
und/oder
b) die Haltefläche (106), insbesondere in der Kopplungsstellung, eben oder im Wesentlichen eben ausgebildet ist oder wenn die Haltefläche (106) strukturiert, insbesondere eine Mehrzahl von Stabilisierungsnuten (110) umfassend, ausgebildet ist.

10. System nach einem der voranstehenden Ansprüche, **dadurch gekennzeichnet, dass** die Behälterhülle (158) einen Trägervorrichtungsüberzug (112) für eine Trägervorrichtung (34) des Systems (10) umfasst und dass der Trägervorrichtungsüberzug (112) das Trägerelement (104) umfasst,
wobei insbesondere der Trägervorrichtungsüberzug (112)
a) eine Trägervorrichtungsaufnahme (114) definiert, in die die Trägervorrichtung (34) oder ein Teil derselben mindestens teilweise formschlüssig oder im Wesentlichen formschlüssig einführbar ist,
und/oder
b) in Form eines Überziehers (116) oder eines Tiefziehblisters (118) ausgebildet ist, welche die Trägervorrichtungsaufnahme (114) umfassen oder definieren,
und/oder
c) aus einem Kunststoff ausgebildet ist
und/oder
d) einen umlaufenden, radial abstehenden Rückhalteflansch (126) oder eine umlaufende, radial vorspringende Rückhaltekante (128) aufweist, welcher Rückhalteflansch (126) beziehungsweise welche Rückhaltekante (128) in der Kopplungsstellung quer, insbesondere senkrecht, zur Schwerkraftrichtung (22) verlaufen.

11. System nach einem der voranstehenden Ansprüche, **dadurch gekennzeichnet, dass** das Trägerelement (104) und der Behälterboden (20) relativ zueinander bewegbar angeordnet oder ausgebildet sind.

12. System nach einem der voranstehenden Ansprüche, **dadurch gekennzeichnet, dass** das System (10) einen mit verfestigbarem Material (16) befüllten Materialbehälter (156) umfasst,
wobei insbesondere der Materialbehälter (156)
a) vom Behälter (12) umfasst ist
und/oder
b) mindestens teilweise, insbesondere vollständig, im vom Behälter (12) definierten Materialaufnahmeraum (50) angeordnet oder ausgebildet ist
und/oder
c) mindestens eine Sollbruchstelle (190) zum Öffnen desselben aufweist
und/oder
d) eine Materialbehälterschnittstelleneinrichtung (178) umfasst zum Koppeln, insbesondere zum fluiddichten Koppeln, mit der Schnittstelleneinrichtung (164) des Behälters (12) in einer Befüllstellung.

13. System nach einem der voranstehenden Ansprüche, **dadurch gekennzeichnet, dass** die Behälterhülle (158)
a) nur durch Zerstören, insbesondere einer Behälterhüllensollbruchstelle (192), öffenbar ist zum Entnehmen des verfestigten dreidimensionalen Objekts (32)
und/oder
b) mit Ausnahme des Behälterbodens (20) für die zum Verfestigen des verfestigbaren Materials (16) eingesetzte Strahlung (30) undurchlässig oder im Wesentlichen undurchlässig ist, insbesondere für elektromagnetische Strahlung (30) in einem Wellenlängenbereich von etwa 200 nm bis etwa 1000 nm,
und/oder
c) bis auf den Behälterboden (20) einen Transmissionsgrad von maximal 10%, insbesondere von maximal 1%, für die zum Verfestigen des verfestigbaren Materials (16) eingesetzte Strahlung (30) aufweist, insbesondere für elektromagnetische Strahlung (30) in einem Wellenlängenbereich von etwa 200 nm bis etwa 1000 nm.

14. System nach einem der voranstehenden Ansprüche, **dadurch gekennzeichnet, dass** das System (10)
a) eine Haltevorrichtung (18) zum Halten des Behälters (12) umfasst, so dass der Behälterboden (20) quer, insbesondere senkrecht, zur Schwerkraftrichtung (22) im Raum angeordnet ist und sich die Behälterwand (48) entgegen oder im Wesentlichen entgegen der Schwerkraftrichtung (22) vom Behälterboden (20) weg erstreckt,
und/oder
b) eine Trägervorrichtung (34) und eine mit der Trägervorrichtung (34) zusammenwirkende Antriebseinrichtung (42) umfasst zum Bewegen der Trägervorrichtung (34), insbesondere des Trägerelements (104) in der Kopplungsstellung, relativ zum Behälterboden (20),
wobei insbesondere die Antriebseinrichtung (42) ausgebildet ist zum Bewegen des Trägerelements (104) in der Kopplungsstellung parallel oder im Wesentlichen parallel zur Schwerkraftrichtung (22) in Richtung auf den Behälterboden (20) hin und vom Behälterboden (20) weg.

15. System nach einem der voranstehenden Ansprüche, **dadurch gekennzeichnet, dass**
a) das System (10) eine Belichtungseinrichtung (26) zum Belichten umfasst, insbesondere schichtweise oder kontinuierlich, des verfestigbaren Materials (16) durch Beaufschlagen mit Strahlung (30), insbesondere elektromagnetischer Strahlung (30),
wobei insbesondere die Belichtungseinrichtung (26) eine Strahlungsquelle (28) umfasst,
und/oder
b) der Behälter (12) in Form eines Einwegbehälters (102) ausgebildet ist.

## Claims

1. System (10) for manufacturing a three-dimensional object (32) by solidifying, in particular in layers or continuously, a material (16) that is solidifiable under the effect of radiation (30), which system (10) comprises a container (12) for receiving the solidifiable material (16), in which container (12) the solidifiable material (16) is solidifiable in layers or continuously by the effect of radiation (30) for manufacturing the three-dimensional object (32), wherein the container (12) comprises a container base (20) and a peripheral container wall (48) projecting from the container base (20), wherein the container base (20) and the container wall (48) delimit a material receiving space (50) for receiving the solidifiable material (16), wherein the container (12) defines a container inner space (160) surrounded by a container shroud (158), wherein the container inner space (160) comprises the material receiving space (50), wherein the container shroud (158) is closed and wherein the container shroud (158) comprises a support element (104), which defines a holding surface (106) for holding the three-dimensional object (32) formed from the solidifiable material (16), wherein the container (12) has an interface device (164) arranged on the container shroud (158) for introducing the solidifiable material (16) through the container shroud (158) into the container inner space (160) and wherein the interface device (164) is arranged or formed at a distance from the container base (20), **characterized in that** the interface device (164) comprises a membrane, in particular pierceable, and/or a threaded portion (170) or a bayonet connection for releasably connecting to a corresponding material container interface device (178) of a material container (156) filled with solidifiable material (16).

2. System in accordance with claim 1, **characterized in that** the container base (20) and/or the container wall (48) form part of the container shroud (158).

3. System in accordance with any one of the preceding claims, **characterized in that** the interface device (164) is not arranged or formed in the container wall or in or on the container wall.

4. System in accordance with any one of the preceding claims, **characterized in that** the container base (20)
a) is made from a different material than the container wall (48)
and/or
b) is configured to be transmissive to the radiation (30) used to solidify the solidifiable material (16), in particular to electromagnetic radiation (30) in a wavelength range of about 200 nm to about 1000 nm,
and/or
c) is configured in the form of a separating element (56),
and/or
d) is provided with a non-stick layer (58) delimiting the material receiving space (50) or **in that** the container base (20) is made from a container base material that does not adhere or adheres little to the solidified material (16).

5. System in accordance with any one of the preceding claims, **characterized in that** the container base (20)
a) is configured in the form of a film or is made from a film
and/or
b) is of elastic and/or flexible configuration
and/or
c) has a thickness (64) in a range of about 0.05 mm to about 3 mm, in particular in a range of about 0.07 mm to about 0.3 mm,
and/or
d) is made from a plastic, in particular from polytetrafluoroethylene (PTFE), perfluoroalkoxy polymer (PFA), ethylene tetrafluoroethylene copolymer (ETFE) and/or tetrafluoroethylene hexafluoropropylene copolymer (FEP).

6. System in accordance with any one of the preceding claims, **characterized in that** the container wall (48)
a) extends perpendicularly or substantially perpendicularly away from the container base (20)
and/or
b) is configured to be self-supporting, in particular in the form of a self-enclosed annular container wall frame (60).

7. System in accordance with any one of the preceding claims, **characterized in that** the container shroud (158)
a) is made at least partially from a film (186), wherein in particular the film (186) is of elastic and/or flexible configuration,
and/or
b) has a thickness (188) in a range of about 0.05 mm to about 1.5 mm, in particular in a range of about 0.1 mm to about 0.6 mm,
and/or
c) is made from a plastic,
and/or
d) is formed in one piece, in particular except for the container base (20).

8. System in accordance with any one of the preceding claims, **characterized in that**
a) the support element (104) is arranged or formed opposite or substantially opposite the container base (20)
and/or
b) the holding surface (106) is arranged or formed facing in the direction or substantially in the direction toward the container base (20).

9. System in accordance with any one of the preceding claims, **characterized in that** the support element (104) is configured to releasably couple to a movably formed or arranged support device (34) of the system (10) in a coupling position,
wherein, in particular
a) the support element (104) comprises at least one first support element coupling element (132), which in the coupling position is in force- and/or positive-locking engagement with at least one second support element coupling element (134) of the support device (34),
and/or
b) the holding surface (106), in particular in the coupling position, is of planar or substantially planar configuration or the holding surface (106) is of structured configuration, in particular comprising a plurality of stabilization grooves (110).

10. System in accordance with any one of the preceding claims, **characterized in that** the container shroud (158) comprises a support device cover (112) for a support device (34) of the system (10), and **in that** the support device cover (112) comprises the support element (104),
wherein, in particular, the support device cover (112)
a) defines a support device receptacle (114), into which the support device (34) or a part thereof is at least partially introducible in a positive-locking or substantially positive-locking manner,
and/or
b) is configured in the form of a sheath (116) or a deep-drawn blister (118), which comprise or define the support device receptacle (114),
and/or
c) is made from a plastic
and/or
d) has a peripheral, radially protruding retaining flange (126) or a peripheral, radially projecting retaining edge (128), which retaining flange (126) or retaining edge (128) in the coupling position runs transversely, in particular perpendicularly, to the direction of gravity (22).

11. System in accordance with any one of the preceding claims, **characterized in that** the support element (104) and the container base (20) are arranged or formed so as to be moveable relative to one another.

12. System in accordance with any one of the preceding claims, wherein the system (10) comprises a material container (156) filled with solidifiable material (16),
wherein, in particular, the material container (156)
a) is comprised by the container (12)
and/or
b) is arranged or formed at least partially, in particular entirely, in the material receiving space (50) defined by the container (12)
and/or
c) has at least one predetermined breaking point (190) for opening same
and/or
d) comprises a material container interface device (178) for coupling, in particular for coupling in a fluid-tight manner, to the interface device (164) of the container (12) in a filling position.

13. System in accordance with any one of the preceding claims, wherein the container shroud (158)
a) is openable only by means of destruction, in particular by destroying a container shroud predetermined breaking point (192), for removing the solidified three-dimensional object (32),
and/or
b) with the exception of the container base (20) is configured to be impervious or substantially impervious to the radiation (30) used to solidify the solidifiable material (16), in particular to electromagnetic radiation (30) in a wavelength range of about 200 nm to about 1000 nm,
and/or
c) except for the container base (20) has a transmittance of at most 10%, in particular at most 1%, to the radiation (30) used to solidify the solidifiable material (16), in particular to electromagnetic radiation (30) in a wavelength range of about 200 nm to about 1000 nm.

14. System in accordance with any one of the preceding claims, wherein the system (10) comprises
a) a holding device (18) for holding the container (12), such that the container base (20) is arranged in space transversely, in particular perpendicularly, to the direction of gravity (22) and the container wall (48) extends away from the container base (20) counter to or substantially counter to the direction of gravity (22)
and/or
b) a support device (34) and a drive device (42) that cooperates with the support device (34) for moving the support device (34), in particular the support element (104) in the coupling position, relative to the container base (20),
wherein, in particular, the drive device (42) is configured to move the support element (104) in the coupling position in parallel or substantially in parallel to the direction of gravity (22) in the direction toward the container base (20) and away from the container base (20).

15. System in accordance with any one of the preceding claims, wherein
a) the system (10) further comprises an exposure device (26) for exposing the solidifiable material (16) to light, in particular in layers or continuously, by subjecting it to radiation, in particular electromagnetic radiation (30),
wherein, in particular, the exposure device (26) comprises a radiation source (28),
and/or
b) the container (12) is configured in the form of a disposable container (102).

## Revendications

1. Système (10) pour produire un objet tridimensionnel (32) par solidification, en particulier en couches ou en continu, d'un matériau (16) solidifiable sous l'action d'un rayonnement (30), lequel système (10) comprend un récipient (12) pour loger le matériau solidifiable (16), récipient (12) dans lequel le matériau solidifiable (16) peut être solidifié en couches ou en continu par l'action d'un rayonnement (30) pour produire l'objet tridimensionnel (32), où le récipient (12) comprend un fond de récipient (20) et une paroi circonférentielle de récipient (48) dépassant depuis le fond de récipient (20), où le fond de récipient (20) et la paroi de récipient (48) délimitent un espace de réception de matériau (50) pour recevoir le matériau solidifiable (16), où le récipient (12) définit un espace intérieur de récipient (160) entouré par une enveloppe de récipient (158), où l'espace intérieur de récipient (160) comprend l'espace de réception de matériau (50), où l'enveloppe de récipient (158) est fermée et où l'enveloppe de récipient (158) comprend un élément porteur (104) qui définit une surface de maintien (106) pour maintenir l'objet tridimensionnel (32) formé à partir du matériau solidifiable (16), où le récipient (12) présente un dispositif d'interface (164) disposé sur l'enveloppe de récipient (158) pour introduire le matériau solidifiable (16) à travers l'enveloppe de récipient (158) dans l'espace intérieur de récipient (160) et où le dispositif d'interface (164) est disposé ou conçu à distance du fond de récipient (20), **caractérisé en ce que** le dispositif d'interface (164) comprend une membrane, en particulier perçable, et/ou un tronçon fileté (170) ou un raccord à baïonnette pour la liaison amovible avec un dispositif d'interface de récipient de matériau (178) correspondant d'un récipient de matériau (156) rempli de matériau solidifiable (16).

2. Système selon la revendication 1, **caractérisé en ce que** le fond de récipient (20) et/ou la paroi de récipient (48) font partie de l'enveloppe de récipient (158).

3. Système selon l'une des revendications précédentes, **caractérisé en ce que** le dispositif d'interface (164) n'est pas disposé ou conçu dans la paroi de récipient (48), ou dans ou sur la paroi de récipient (48).

4. Système selon l'une des revendications précédentes, **caractérisé en ce que** le fond de récipient (20)
a) est conçu en un autre matériau que la paroi de récipient (48)
et/ou
b) pour le rayonnement (30) utilisé pour solidifier le matériau solidifiable (16) est conçu pour être perméable aux rayonnements, en particulier au rayonnement électromagnétique (30) dans une plage de longueurs d'onde d'environ 200 nm à environ 1000 nm,
et/ou
c) est conçu sous la forme d'un élément de séparation (56) et/ou
d) est muni d'une couche antiadhésive (58) délimitant l'espace de réception de matériau (50) ou **en ce que** le fond de récipient (20) est conçu en un matériau de fond de récipient qui n'adhère pas ou peu au matériau solidifié (16).

5. Système selon l'une des revendications précédentes, **caractérisé en ce que** le fond de récipient (20)
a) est conçu sous la forme d'un film (62) ou à partir d'un film (62)
et/ou
b) est conçu pour être élastique et/ou flexible et/ou
c) présente une épaisseur (64) dans une plage d'environ 0,05 mm à environ 3 mm, en particulier dans une plage d'environ 0,07 mm à environ 0,3 mm,
et/ou
d) est conçu en un plastique, en particulier en polytétrafluoroéthylène (PTFE), polymère perfluoroalcoxy (PFA), copolymère éthylène-tétrafluoroéthylène (ETFE) et/ou copolymère tétrafluoroéthylène-hexafluoropropylène (FEP).

6. Système selon l'une des revendications précédentes, **caractérisé en ce que** la paroi de récipient (48)
a) s'étend perpendiculairement ou sensiblement perpendiculairement en s'éloignant du fond de récipient (20)
et/ou
b) est conçue pour être autoporteuse, en particulier sous la forme d'un cadre de paroi de récipient annulaire (60) fermé sur lui-même.

7. Système selon l'une des revendications précédentes, **caractérisé en ce que** l'enveloppe de récipient (158)
a) est au moins partiellement conçue en un film (186), où en particulier le film (186) est conçu pour être élastique et/ou flexible
et/ou
b) présente une épaisseur (188) dans une plage d'environ 0,05 mm à environ 1,5 mm, en particulier dans une plage d'environ 0,1 mm à environ 0,6 mm,
et/ou
c) est conçue en un plastique
et/ou
d) est conçue d'une seule pièce, en particulier jusqu'au fond de récipient (20).

8. Système selon l'une des revendications précédentes, **caractérisé en ce que**
a) l'élément porteur (104) est disposé ou conçu à l'opposé ou sensiblement à l'opposé du fond de récipient (20) et/ou
b) la surface de maintien (106) est disposée ou conçue pour être tournée dans la direction ou sensiblement dans la direction du fond de récipient (20).

9. Système selon l'une des revendications précédentes, **caractérisé en ce que** l'élément porteur (104) est conçu pour s'accoupler de manière amovible à un dispositif porteur (34) du système (10) conçu ou disposé de manière mobile dans une position d'accouplement,
où en particulier
a) l'élément porteur (104) comprend au moins un premier élément d'accouplement d'élément porteur (132) qui se trouve dans la position d'accouplement en prise par assemblage par force et/ou de forme avec au moins un deuxième élément d'accouplement d'élément porteur (134) du dispositif porteur (34)
et/ou
b) la surface de maintien (106), en particulier dans la position d'accouplement, est conçue pour être plane ou sensiblement plane ou si la surface de maintien (106) est conçue, comprenant en particulier une pluralité de rainures de stabilisation (110).

10. Système selon l'une des revendications précédentes, **caractérisé en ce que** l'enveloppe de récipient (158) comprend un revêtement de dispositif porteur (112) pour un dispositif porteur (34) du système (10) et **en ce que** le revêtement de dispositif porteur (112) comprend l'élément porteur (104),
où en particulier le revêtement de dispositif porteur (112)
a) définit un logement de dispositif porteur (114), dans lequel le dispositif porteur (34) ou une partie de celui-ci peut être inséré au moins partiellement par assemblage de forme ou sensiblement par assemblage de forme,
et/ou
b) est conçu sous la forme d'une enceinte (116) ou d'un blister embouti (118) qui comprend ou définit le logement de dispositif porteur (114),
et/ou
c) est conçu en un plastique
et/ou
d) présente une bride de retenue circonférentielle (126) dépassant radialement ou un bord de retenue (128) circonférentiel saillant radialement, laquelle bride de retenue (126) ou lequel bord de retenue (128) s'étend, dans la position d'accouplement, transversalement, en particulier perpendiculairement, à la direction de la gravité (22).

11. Système selon l'une des revendications précédentes, **caractérisé en ce que** l'élément porteur (104) et le fond de récipient (20) sont disposés ou conçus pour être mobiles l'un par rapport à l'autre.

12. Système selon l'une des revendications précédentes, **caractérisé en ce que** le système (10) comprend un récipient de matériau (156) rempli de matériau solidifiable (16),
où en particulier le récipient de matériau (156)
a) est compris dans le récipient (12)
et/ou
b) est disposé ou conçu au moins partiellement, en particulier complètement, dans l'espace de logement de matériau (50) défini par le récipient (12)
et/ou
c) présente au moins un point de rupture prédéterminé (190) pour ouvrir celui-ci
et/ou
d) comprend un dispositif d'interface de récipient de matériau (178) pour l'accouplement, en particulier pour l'accouplement étanche aux fluides, avec le dispositif d'interface (164) du récipient (12) dans une position de remplissage.

13. Système selon l'une des revendications précédentes, **caractérisé en ce que** l'enveloppe de récipient (158)
a) ne peut être ouverte que par destruction, en particulier d'un point de rupture prédéterminé de l'enveloppe du récipient (192), pour le retrait de l'objet tridimensionnel (32) solidifié et/ou
b) à l'exception du fond de récipient (20), est imperméable ou sensiblement imperméable au rayonnement (30) utilisé pour solidifier le matériau solidifiable (16), en particulier au rayonnement électromagnétique (30) dans une plage de longueurs d'onde d'environ 200 nm à environ 1000 nm, et/ou
c) jusqu'au fond de récipient (20) présente un degré de transmission d'au maximum 10 %, en particulier d'au maximum 1 %, pour le rayonnement (30) utilisé pour solidifier le matériau solidifiable (16), en particulier pour le rayonnement électromagnétique (30) dans une plage de longueurs d'onde d'environ 200 nm à environ 1000 nm.

14. Système selon l'une des revendications précédentes, **caractérisé en ce que** le système (10)
a) comprend un dispositif de maintien (18) pour maintenir le récipient (12), de telle sorte que le fond de récipient (20) est disposé dans l'espace transversalement, en particulier perpendiculairement, à la direction de la gravité (22) et la paroi de récipient (48) s'étend en s'éloignant du fond de récipient (20) de manière opposée ou sensiblement opposée à la direction de la gravité (22),
et/ou
b) comprend un dispositif porteur (34) et un dispositif d'entraînement (42) coopérant avec le dispositif porteur (34) pour déplacer le dispositif porteur (34), en particulier l'élément porteur (104) dans la position d'accouplement, par rapport au fond de récipient (20),
où en particulier le dispositif d'entraînement (42) est conçu pour déplacer l'élément porteur (104) dans la position d'accouplement parallèlement ou sensiblement parallèlement à la direction de la gravité (22) en direction du fond de récipient (20) et depuis le fond de récipient (20).

15. Système selon l'une des revendications précédentes, **caractérisé en ce que**
a) le système (10) comprend un dispositif d'éclairage (26) pour éclairer, en particulier en couches ou en continu, le matériau solidifiable (16) par exposition à un rayonnement (30), en particulier un rayonnement électromagnétique (30), où en particulier le dispositif d'éclairage (26) comprend une source de rayonnement (28),
et/ou
b) le récipient (12) est conçu sous la forme d'un récipient jetable (102).
